# EUROPEAN PATENT APPLICATION

(11) **EP 4 418 547 A1**
(43) Date of publication of application: **21.08.2024**
(21) Application number: 24151153.4
(22) Date of filing: 10.01.2024
(51) Int. Cl.: H04B 7/024, H04B 7/0404, H04B 7/06, H04B 7/08

(54) **METHOD FOR SIMULTANEOUS DATA RECEPTION AND MEASUREMENT USING LAYER REDUCTION FOR MULTI RX RECEPTION CAPABLE UES**

(30) Priority: 16.02.2023 IN 202341010434
(71) Applicant: Nokia Technologies Oy, 02610 Espoo (FI)
(72) Inventor: CAUDURO DIAS DE PAIVA, Rafael, Aalborg (DK); ROM, Christian, Aalborg (DK); DALSGAARD, Lars, Oulu (FI); BELLUR, Vinayak, Bangalore (IN)
(74) Representative: Nokia EPO representatives

(57) **Abstract**

An apparatus may be configured to: receive PDSCH with a plurality of layers from at least two network nodes; receive at least one DCI, wherein the at least one DCI is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes; during the measurement window, perform at least one measurement; and during the measurement window, receive or transmit with the at least one layer, wherein a number of layers of the at least one layer is less than a number of layers of the plurality of layers received outside of the measurement window.

## Description

### BACKGROUND

It is known, in user equipment (UE) construction, to include at least one receiver.

### FIELD OF EMBODIMENTS

The example and non-limiting embodiments relate generally to UEs with multiple receiver chains/beams and, more particularly, to UEs capable of receiving data while also performing radio resource management (RRM) measurements.

### BRIEF SUMMARY OF EMBODIMENTS

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: receive a physical downlink shared channel with a plurality of layers from at least two network nodes; receive at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes; during the measurement window, perform at least one measurement; and during the measurement window, perform receiving or transmission with the at least one layer, wherein a number of layers of the at least one layer is less than a number of layers of the plurality of layers received by the apparatus outside of the measurement window.

In accordance with one aspect, a method comprising: receiving, with a user equipment, a physical downlink shared channel with a plurality of layers from at least two network nodes; receiving at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes; during the measurement window, performing at least one measurement; and during the measurement window, performing receiving or transmission with the at least one layer, wherein a number of layers of the at least one layer is less than a number of layers of the plurality of layers received by the user equipment outside of the measurement window.

In accordance with one aspect, an apparatus comprising means for performing: receiving a physical downlink shared channel with a plurality of layers from at least two network nodes; receiving at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes; during the measurement window, at least one measurement; and during the measurement window, receiving or transmission with the at least one layer, wherein a number of layers of the at least one layer is less than a number of layers of the plurality of layers received by the apparatus outside of the measurement window.

In accordance with one aspect, a non-transitory computerreadable medium comprising program instructions stored thereon for performing at least the following: causing receiving, with a user equipment, of a physical downlink shared channel with a plurality of layers from at least two network nodes; causing receiving of at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes; during the measurement window, performing at least one measurement; and during the measurement window, performing receiving or transmission with the at least one layer, wherein a number of layers of the at least one layer is less than a number of layers of the plurality of layers received by the user equipment outside of the measurement window.

In accordance with one aspect, an apparatus comprising: at least one processor; and at least one memory storing instructions that, when executed by the at least one processor, cause the apparatus at least to: receive a physical downlink shared channel with a plurality of layers from at least two network nodes; receive at least one downlink control information, wherein the at least one downlink control information is configured to schedule at least one layer during a measurement window using, at least, a first transmission configuration indication, wherein the first transmission configuration indication is associated with a first network node of the at least two network nodes; during the measurement window, perform at least one measurement; and during the measurement window, perform receiving or transmission with the at least one layer, wherein a number of layers of the at least one layer is less than a number of layers of the plurality of layers received by the apparatus outside of the measurement window.

In accordance with one aspect, a method comprising: receiving, with a user equipment, a physical downlink shared channel with a plurality of layers from at least two network nodes; receiving at least one downlink control information, wherein the at least one downlink control information is configured to schedule at least one layer during a measurement window using, at least, a first transmission configuration indication, wherein the first transmission configuration indication is associated with a first network node of the at least two network nodes; during the measurement window, performing at least one measurement; and during the measurement window, performing receiving or transmission with the at least one layer, wherein a number of layers of the at least one layer is less than a number of layers of the plurality of layers received by the user equipment outside of the measurement window.

In accordance with one aspect, an apparatus comprising means for performing: receiving a physical downlink shared channel with a plurality of layers from at least two network nodes; receiving at least one downlink control information, wherein the at least one downlink control information is configured to schedule at least one layer during a measurement window using, at least, a first transmission configuration indication, wherein the first transmission configuration indication is associated with a first network node of the at least two network nodes; during the measurement window, at least one measurement; and during the measurement window, receiving or transmission with the at least one layer, wherein a number of layers of the at least one layer is less than a number of layers of the plurality of layers received by the apparatus outside of the measurement window.

In accordance with one aspect, a non-transitory computerreadable medium comprising program instructions stored thereon for performing at least the following: causing receiving, with a user equipment, of a physical downlink shared channel with a plurality of layers from at least two network nodes; causing receiving of at least one downlink control information, wherein the at least one downlink control information is configured to schedule at least one layer during a measurement window using, at least, a first transmission configuration indication, wherein the first transmission configuration indication is associated with a first network node of the at least two network nodes; during the measurement window, performing at least one measurement; and during the measurement window, causing performing of receiving or transmission with the at least one layer, wherein a number of layers of the at least one layer is less than a number of layers of the plurality of layers received by the user equipment outside of the measurement window.

In accordance with one aspect, an apparatus comprising: at least one processor; and at least one memory storing instructions that, when executed by the at least one processor, cause the apparatus at least to: transmit, to a user equipment, at least one downlink control information, wherein the user equipment is configured for use with a plurality of layers, wherein the at least one downlink control information is configured to schedule at least one layer during a measurement window using, at least, a first transmission configuration indication and a second transmission configuration indication, wherein the first transmission configuration indication is associated with the apparatus; and transmit, to the user equipment, a physical downlink shared channel with the at least one layer, wherein a number of layers of the at least one layer is less than a number of layers of the plurality of layers accessible to the user equipment outside of the measurement window.

In accordance with one aspect, a method comprising: transmitting, with a network node to a user equipment, at least one downlink control information, wherein the user equipment is configured for use with a plurality of layers, wherein the at least one downlink control information is configured to schedule at least one layer during a measurement window using, at least, a first transmission configuration indication and a second transmission configuration indication, wherein the first transmission configuration indication is associated with the network node; and transmitting, to the user equipment, a physical downlink shared channel with the at least one layer, wherein a number of layers of the at least one layer is less than a number of layers of the plurality of layers accessible to the user equipment outside of the measurement window.

In accordance with one aspect, an apparatus comprising means for performing: transmitting, to a user equipment, at least one downlink control information, wherein the user equipment is configured for use with a plurality of layers, wherein the at least one downlink control information is configured to schedule at least one layer during a measurement window using, at least, a first transmission configuration indication and a second transmission configuration indication, wherein the first transmission configuration indication is associated with the apparatus; and transmitting, to the user equipment, a physical downlink shared channel with the at least one layer, wherein a number of layers of the at least one layer is less than a number of layers of the plurality of layers accessible to the user equipment outside of the measurement window.

In accordance with one aspect, a non-transitory computerreadable medium comprising program instructions stored thereon for performing at least the following: causing transmitting, to a user equipment with a network node, of at least one downlink control information, wherein the user equipment is configured for use with a plurality of layers, wherein the at least one downlink control information is configured to schedule at least one layer during a measurement window using, at least, a first transmission configuration indication and a second transmission configuration indication, wherein the first transmission configuration indication is associated with the network node; and causing transmitting, to the user equipment, of a physical downlink shared channel with the at least one layer, wherein a number of layers of the at least one layer is less than a number of layers of the plurality of layers accessible to the user equipment outside of the measurement window.

In accordance with one aspect, an apparatus comprising: at least one processor; and at least one memory storing instructions that, when executed by the at least one processor, cause the apparatus at least to: transmit, to a user equipment, at least one downlink control information, wherein the user equipment is configured for use with a plurality of layers, wherein the at least one downlink control information is configured to schedule at least one layer during a measurement window using, at least, a first transmission configuration indication, wherein the first transmission configuration indication is associated with the apparatus; and transmit, to the user equipment, a physical downlink shared channel with the at least one layer, wherein a number of layers of the at least one layer is less than a number of layers of the plurality of layers accessible to the user equipment outside of the measurement window.

In accordance with one aspect, a method comprising: transmitting, to a user equipment with a network node, at least one downlink control information, wherein the user equipment is configured for use with a plurality of layers, wherein the at least one downlink control information is configured to schedule at least one layer during a measurement window using, at least, a first transmission configuration indication, wherein the first transmission configuration indication is associated with the network node; and transmitting, to the user equipment, a physical downlink shared channel with the at least one layer, wherein a number of layers of the at least one layer is less than a number of layers of the plurality of layers accessible to the user equipment outside of the measurement window.

In accordance with one aspect, an apparatus comprising means for performing: transmitting, to a user equipment, at least one downlink control information, wherein the user equipment is configured for use with a plurality of layers, wherein the at least one downlink control information is configured to schedule at least one layer during a measurement window using, at least, a first transmission configuration indication, wherein the first transmission configuration indication is associated with the apparatus; and transmitting, to the user equipment, a physical downlink shared channel with the at least one layer, wherein a number of layers of the at least one layer is less than a number of layers of the plurality of layers accessible to the user equipment outside of the measurement window.

In accordance with one aspect, a non-transitory computerreadable medium comprising program instructions stored thereon for performing at least the following: causing transmitting, to a user equipment with a network node, of at least one downlink control information, wherein the user equipment is configured for use with a plurality of layers, wherein the at least one downlink control information is configured to schedule at least one layer during a measurement window using, at least, a first transmission configuration indication, wherein the first transmission configuration indication is associated with the network node; and causing transmitting, to the user equipment, a physical downlink shared channel with the at least one layer, wherein a number of layers of the at least one layer is less than a number of layers of the plurality of layers accessible to the user equipment outside of the measurement window.

According to some aspects, there is provided the subject matter of the independent claims. Some further aspects are defined in the dependent claims.

### BRIEF DESCRIPTION OF THE SEVERAL VIEWS OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4A is a diagram illustrating features as described herein;
FIG. 4B is a diagram illustrating features as described herein;
FIG. 6 is a diagram illustrating features as described herein;
FIG. 7A is a diagram illustrating features as described herein;
FIG. 7B is a diagram illustrating features as described herein;
FIG. 7C is a diagram illustrating features as described herein;
FIG. 8A is a diagram illustrating features as described herein;
FIG. 8B is a diagram illustrating features as described herein;
FIG. 9 is a diagram illustrating features as described herein;
FIG. 10 is a flowchart illustrating steps as described herein;
FIG. 11 is a flowchart illustrating steps as described herein;
FIG. 12 is a flowchart illustrating steps as described herein;
FIG. 13 is a table illustrating features as described herein;
FIG. 14 is a flowchart illustrating steps as described herein;
FIG. 15 is a flowchart illustrating steps as described herein;
FIG. 16 is a flowchart illustrating steps as described herein; and
FIG. 17 is a flowchart illustrated steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- 6G: sixth generation
- ACK: acknowledgment
- AMF: access and mobility management function
- BS: base station
- cRAN: cloud radio access network
- CSI: channel state information
- CSI-RS: channel state information reference signal
- CU: central unit
- DCI: downlink control information
- DTX: discontinuous transmission
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- HARQ: hybrid automatic repeat request
- I/F: interface
- loT: Internet of Things
- L1: layer 1
- LTE: long term evolution
- MAC: medium access control
- mDCI: multi downlink control information
- MIMO: multi input multi output
- MME: mobility management entity
- NACK: negative acknowledgement
- ng or NG: new generation
- ng-eNB or NG-eNB: new generation eNB
- NR: new radio
- N/W or NW: network
- OFDM: orthogonal frequency-division multiplexing
- O-RAN: open radio access network
- PBCH: physical broadcast channel
- PCI: physical cell ID
- PDCCH: physical downlink control channel
- PDCP: packet data convergence protocol
- PDSCH: physical downlink shared channel
- PHY: physical layer
- PRB: physical resource block
- PSS: primary synchronization signal
- RAN: radio access network
- RF: radio frequency
- RLC: radio link control
- RRC: radio resource control
- RRH: remote radio head
- RRM: radio resource management
- RS: reference signal
- RSRP: reference signal received power
- RU: radio unit
- Rx: receiver
- SCS: subcarrier spacing
- SDAP: service data adaptation protocol
- sDCI: single downlink control information
- SFN: single frequency network
- SGW: serving gateway
- SMF: session management function
- SMTC: SS/PBCH block measurement timing configuration
- SS: synchronization signal
- SSB: SS/PBCH block
- SSS: secondary synchronization signal
- TCI: transmission configuration indication
- TP: total power
- TRP: transmission and reception point
- Tx: transmitter
- UAI: UE assistance information
- UE: user equipment (e.g., a wireless, typically mobile device)
- UPF: user plane function
- URLLC: ultra-reliable low latency communications
- VNR: virtualized network function

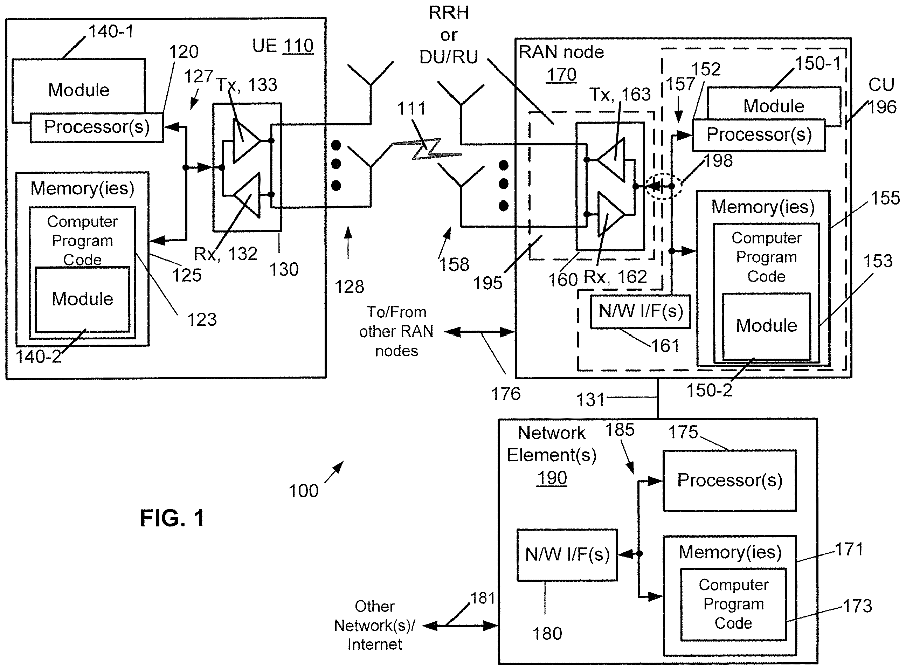

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR), and/or 5G-Advanced (i.e. NR Rel-18 and beyond) and/or 6G. In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-Dus), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-Dus. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing networklike functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein generally relate to UEs with multiple input multiple output (MIMO) capability. FR2 antenna arrays on UEs are assumed directive; therefore, in order to achieve good performance, UEs can have one or more multiple antenna panels embedded. As such, the baseline FR2 RAN4 requirements are based on the assumption that UE is only required to use a single-chain. Hence, for a UE to fulfill the current requirements, it only requires a UE having a single active FR2 Rx chain/Rx beam active at any time.

Designing the UE requirements assuming that the UE only has a single receiver 'direction' (Rx chain or spatial setting) active at a time may have a clear benefit for UE implementation in making the implementation simpler, especially for early implementations, while not limiting the UE implementation. Additionally, it may have clear UE power saving benefits. The assumption obviously also has some drawbacks. For example, one drawback is on neighbor cell measurements, since a single Rx reception assumption may mean that the UE has to perform a sweep of its reception using different Rx spatial settings and/or over multiple antenna panels. Hence, because the UE must sweep in order to get measurements of its surrounding environment - full spherical coverage - the allowed evaluation time for measurements in FR2 increases compared to FR1 (where omnidirectional Rx is assumed), and obviously takes a longer time due to the sweep delay.

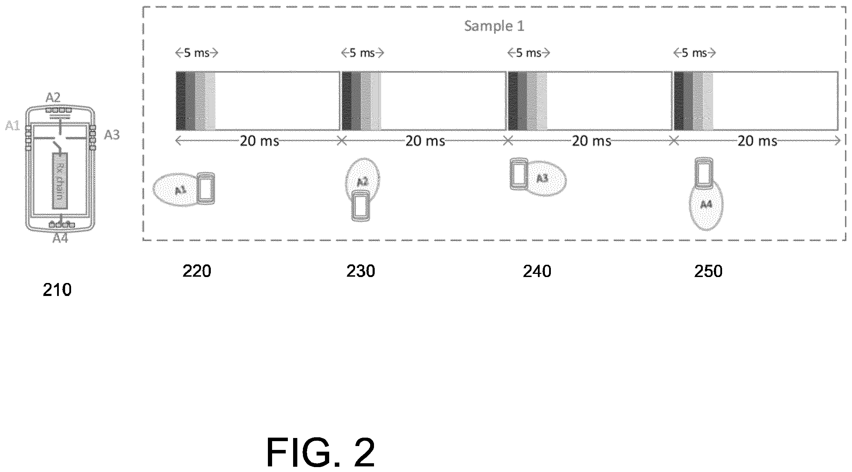

Referring now to FIG. 2, illustrated is an example of a single-chain 4-panel/RX UE (210) may require 4 consecutive Rx sweep/bursts (220, 230, 240, 250) for a single sample full spherical measurement acquisition. This is one non-limiting example UE implementation.

Additionally, it may be assumed that a UE needs a given number of samples per Rx direction. For example, for intra-frequency SSB-based L3 measurements in 9.2.5 of TS 38.133, 3 to 5 samples may be needed for primary synchronization signal/secondary synchronization signal (PSS/SSS) detection, depending on the UE power class. If different spatial setting are needed when performing L1 and L3 measurements, multiple samples may be needed for each Rx spatial setting for L1 and L3 measurements to ensure measurement accuracy.

In the example shown in FIG. 2, the UE (210) uses the SSB burst for cell detection and measurements. In the example, each SSB burst is transmitted by the gNB once per 20ms. The baseline assumption with 1 Rx active at a time on the UE side means that the UE may sample in one direction once per SSB burst.

Rel-18 RAN4 WID RP-221753 targets multi-Rx chains UEs with the following objectives:
"...Introduce necessary requirement(s) for enhanced FR2-1 UEs with simultaneous DL reception with two different QCL TypeD RSs on single component carrier with up to 4 layer DL MIMO
   Enhanced RF requirements:
   Specify RF requirements, mainly spherical coverage requirements, for devices with simultaneous reception from different directions with different QCL TypeD RSs
The legacy spherical coverage requirement for reception from a single direction will be kept
PC3 will be prioritized, other power classes should be considered after the PC3 requirements framework is finalized
Introduce necessary requirement(s) for enhanced FR2-1 UEs with simultaneous DL reception from different directions with different QCL TypeD RSs on a single component carrier
   Enhanced RRM requirements:
   The following requirements should be studied and specified if necessary:
   L1-RSRP measurement delay
   L3 measurement delay (both cell detection delay and measurement period can be considered)
      The starting point is the enhancements related to L1-RSRP measurement enhancements
   RLM and BFD/CBD requirements
   Scheduling/measurement restrictions
   TCI state switching delay with dual TCI
   Receive timing difference between different directions (different QCL Type D RSs)..."

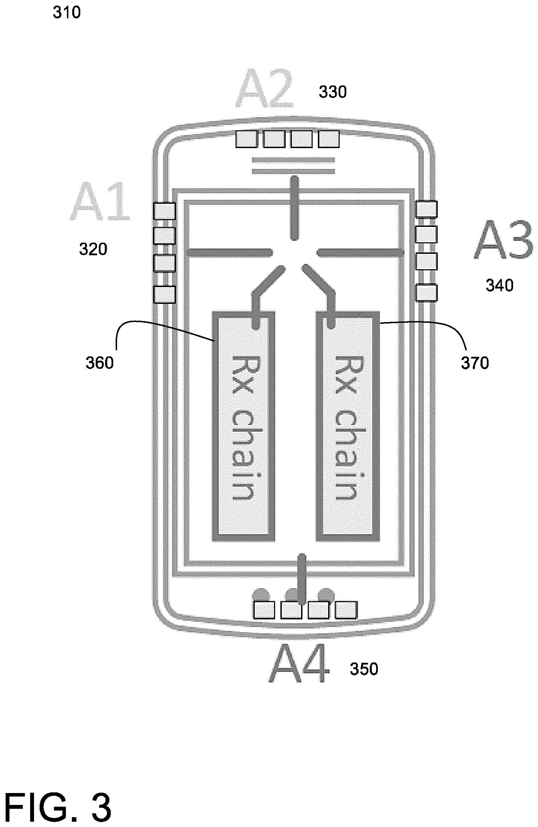

One example of a possible multi-Rx chain UE implementation is depicted in FIG. 3. This UE architecture may be able to provide some clear advantages to the UE and system level performance, for example with respect to measurement related latencies. In this example, 4 antenna panels (320, 330, 340, 350) are assumed to be implemented in the UE (310). The panels may be placed in a way, for example, to improve spherical coverage, and the device may be able to use 2 Rx chains simultaneously (360, 370). The two Rx chains (360, 370) in this example may be switched on simultaneously using input from any of the panels among the four panels (320, 330, 340, 350), and may include any combination of two panels which may be activated simultaneously.

When considering the example of FIG. 3, it may be possible for a UE (at least some UE implementations) to perform measurements, for example radio resource management (RRM) measurements using more than 1 Rx chain at the same time. In other UE implementations, the UE may receive and perform RRM measurements using one Rx chain while receiving data using other Rx chain.

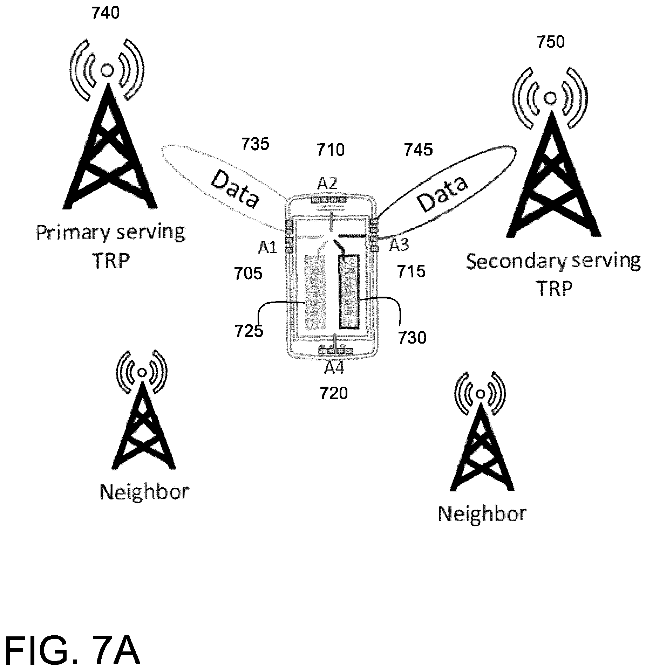

In a normal DL data reception scenario, the multi Rx UE may be expected to be able to receive on 2 data chains from different transmission and reception points (TRPs), as illustrated in FIG. 7A, where a UE uses two Rx chains (725, 730) for receiving data using 2 different Rx chains/panels (705, 715) from 2 different TRPs (740, 750), where each panel contains dual polarized antenna elements, which provide 2 layers. In this scenario, it may, for example, be possible for the UE to receive 4 layer DL MIMO, since in FR2, each panel uses cross-polarized antennas in order to achieve 2 layers, hence when combining 2 panels, 4 layers may be achieved.

It may be noted that TRPs may be organized as separate "physical cells" with the same or different Physical Cell Id (PCI) . They may be different antenna modules at a centralized base station (DU), separated such that they can assume the identity of 2 physical cells for purposes of air interface scheduling. In this case, they can be said to exist in a collocated constellation. In other cases, TRPs may be organized as Remote Radio Heads (e.g. pico RRH) connected to a centralized DU (gNB), with each of them having their own PCIs/SSB allocations. Alternatively, TRPs may each belong to a different "network" and may have different PCIs/frequency band of operation/bandwidth part allocation. TRPs may even have different cells and/or different operators.

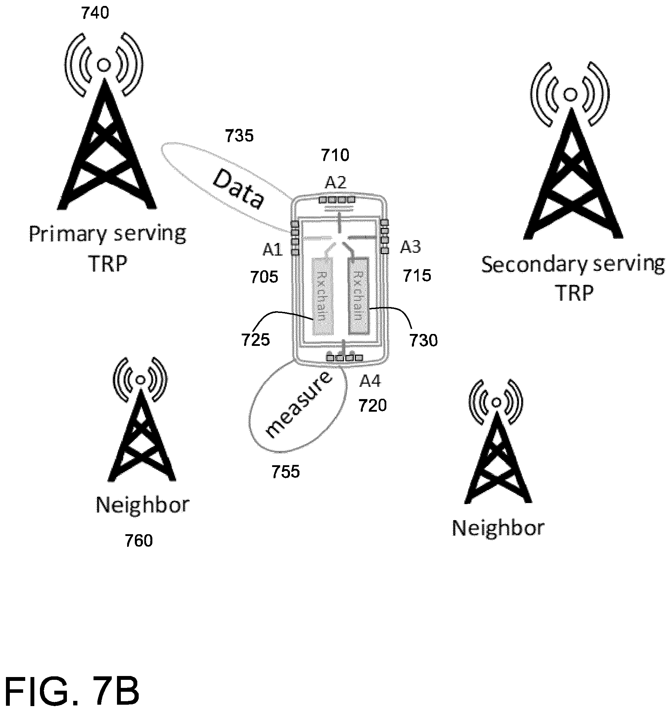

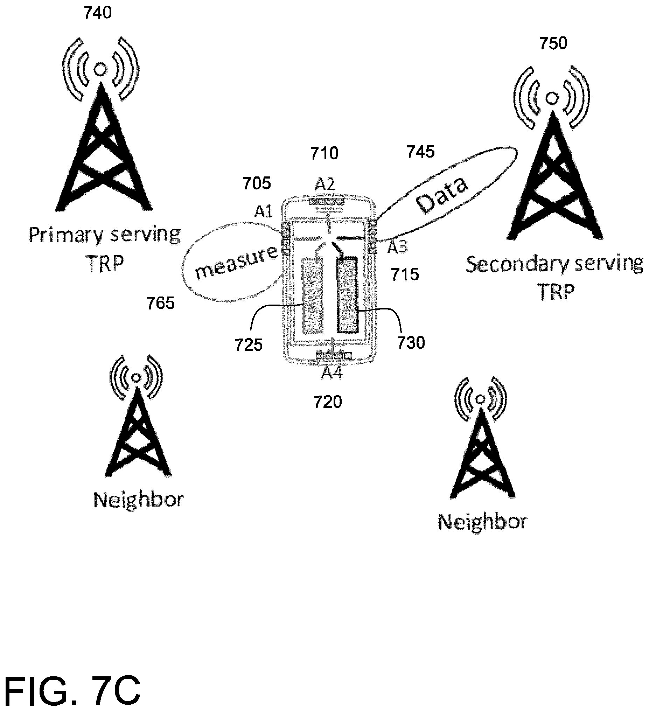

Even though 4 layer DL MIMO is possible with multiple Rx chains in the UE, the UE may not always be assumed to be able to receive data in 4 layers while also performing RRM measurements. Typically, in FR2, L3 RRM measurements may be performed with different spatial Rx setting in the UE (rough beams) than the spatial settings used, for example, for data reception and transmission and for L1 measurements. That means that, in some implementations, a 'broad' beam may be associated with each UE panel for L3 measurements, and no beam refinement may be assumed to be applied, and Rx sweeping between the panels/Rx spatial setting may be expected (and necessary) when conducting such measurements. Indeed, TS 38.133 specifies for FR2-1 a beam sweeping scaling factor, for example, for cell detection, index reading, and/or measurements. In the case of the UEs represented in FIGs. 7, that could mean that the UE may use 1 or 2 rough beams simultaneously (i.e. 1 per panel) when sweeping over the entire UE spherical coverage area.

As part of the existing RAN4 requirements with a single Rx chain it is assumed that the UE cannot perform DL demodulation and RRM measurements tasks simultaneously, due to different spatial filters used for measurement and data. Nevertheless, as a part of the multi Rx discussion in RAN4 it has been proposed that each of the two Rx chains may be performing different tasks independently. Hence, some UE may be able to receive data with one active Rx chain, and perform measurements with the other Rx chain. Other UE implementation (s) may be able to measure using two Rx chains simultaneously, while in some implementation the UE would not be able to perform measurements and data reception simultaneously.

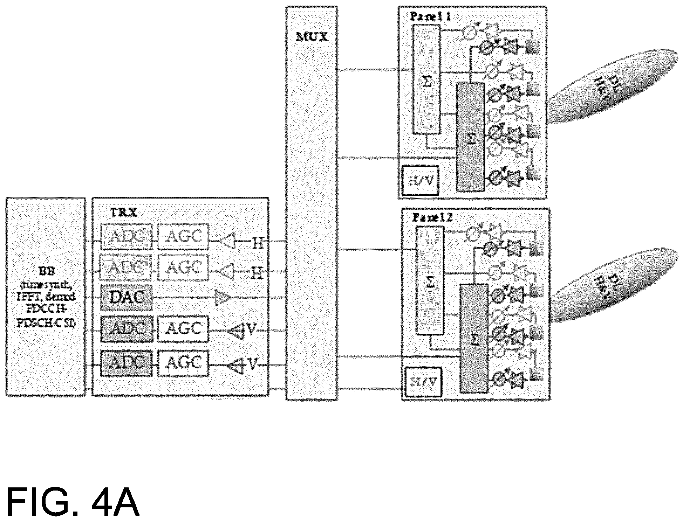

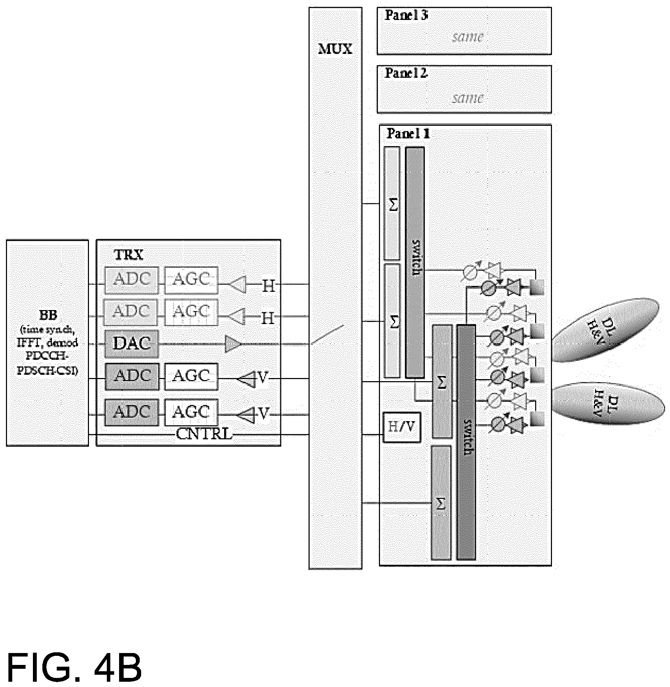

Referring now to FIGs. 4A and 4B, illustrated are two possible, non-limiting examples of UE panel architectures. FIG. 4A illustrates 2 RX chains per panel. FIG. 4B illustrates 4 RX chains on a same panel.

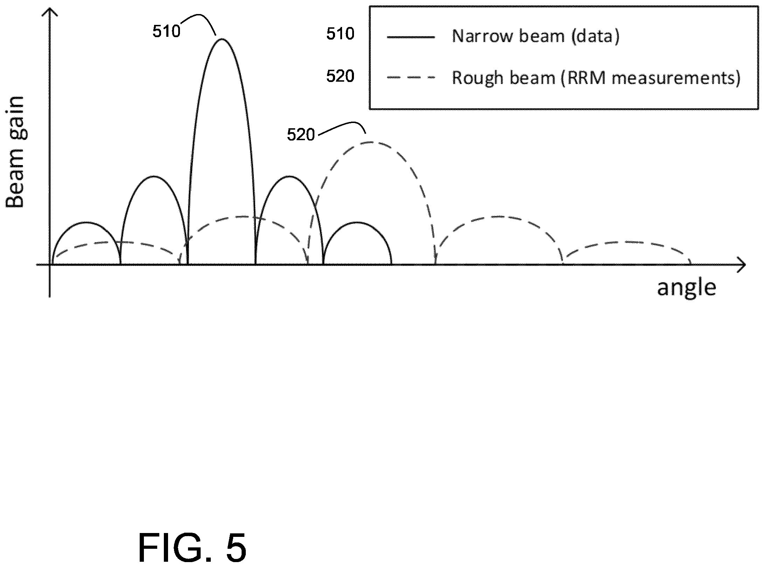

Furthermore, it has been indicated as part of the multi Rx discussion that some UE architectures may not be able to use 2 Rx chains from the same panel. This minimum separation has some impacts on which beams the UE may be simultaneously used for data and RRM measurements. That effectively means that narrow beams used for data may need to be turned off whenever the UE has to perform RRM measurements on a similar direction as that of the data beam. This is illustrated in FIG. 5, where a narrow beam (510) would typically be used for data, and a rough beam (520) would typically be used for RRM measurements. In this figure, it may be observed that the rough beam (520) has a smaller beamforming gain in comparison to the narrow beam (510). That is explained by the fact the rough beams use a reduced number of antenna elements, which may cause them to have lower beamforming gain.

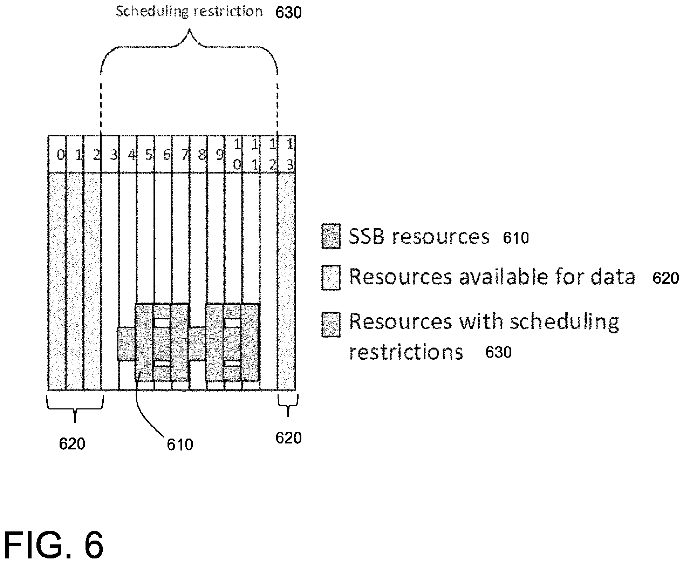

As part of the Rel-15 to Rel-17 RRM requirements, scheduling restrictions may apply when the UE is performing RRM measurements. FIG. 6 shows an example of such restrictions when considering pure 120 kHz subcarrier spacing (SCS) numerology (i.e. SSB and PDSCH using 120 kHz SCS) according to clause 9.2.5.3.3 of TS 38.133. As described in this clause, one symbol before and after the SSB symbols (610) are not available for the UE to be scheduled (630), since with the one Rx assumption, the UE will have to change the spatial filter parameters while doing RRM measurements in the same and/or other directions. Accordingly, only 4 out of 14 symbols are still available for scheduling (620). If we consider that the SS/PBCH block measurement timing configuration (SMTC) window length may be up to 5 ms, that means that because all SSB positions are measured inside the SMTC window, only 280 of the resources - in time - are available during the SMTC window. Additionally, since the SMTC is the same for several UEs in the network, most of the UEs may have restrictions on the same symbols, which limits the network possibility to schedule UEs within the SMTC. As a result, this restriction may generate quite a large network impact when considering a busy network. In an extreme case, the SMTC may be configure with 20 ms periodicity and 5 ms duration, which would imply in 250 of the slots impacted by those restrictions.

Given the above, and regardless of the architecture chosen for UE implementation, assuming RRM measurements are performed continuously, a UE may be assumed to have a need to change Rx settings to perform RRM measurements. For a multi Rx UE, it may be necessary to switch at least one of its receiver chains from DL data reception mode to RRM measurement mode when performing measurements. This situation is shown in FIGs. 7, which illustrate examples for multi RX DL reception, where the UE may have to switch mode (i.e. change spatial Rx settings) of operation from FIG. 7A to FIG. 7B or FIG. 7C. FIG. 7A illustrates an example in which the UE is able to receive two DL streams and achieve 4 layer MIMO. FIGs. 7B and 7C illustrate examples in which the UE is able to receive data in one of its Rx chains while it is using another Rx chain for performing RRM measurements. In these scenarios, 4 layer MIMO is not possible.

In FIG. 7A, the UE has 2 beams dedicated for data reception (735, 745). That may be possible by configuring 2 active transmission configuration indication (TCI) states, which may be connecting the UE to different non-collocated TRPs (e.g. 740, 750) . In FIG. 7B, the UE may be able to maintain one of its Rx chains in DL demodulation (data Rx) mode, such that the data from one TRP, for example the primary serving TRP (740), may be received while performing measurement using a 2nd receiver (720). Hence, the UE may perform measurements (755) (including sweeping) using the second Rx chain (730) using the panels A2 (710), A3 (715), and A4 (720), for example near the direction of a neighbor TRP (760). In case the UE needs to perform measurements (765) on the direction covered by the panel A1 (705), the UE may need to switch to the spatial Rx configuration on panel A1 (705) as shown in FIG. 7C.

Features as described herein may relate to scheduling optimization. Considering the scenario with multi Rx chains UEs, the problem of scheduling optimizations when the UE is performing measurements needs to be addressed. In this scenario, the UE and user (and system in general) may achieve performance gains if it does not have to be completely limited for scheduling on all Rx chains while it is performing measurements.

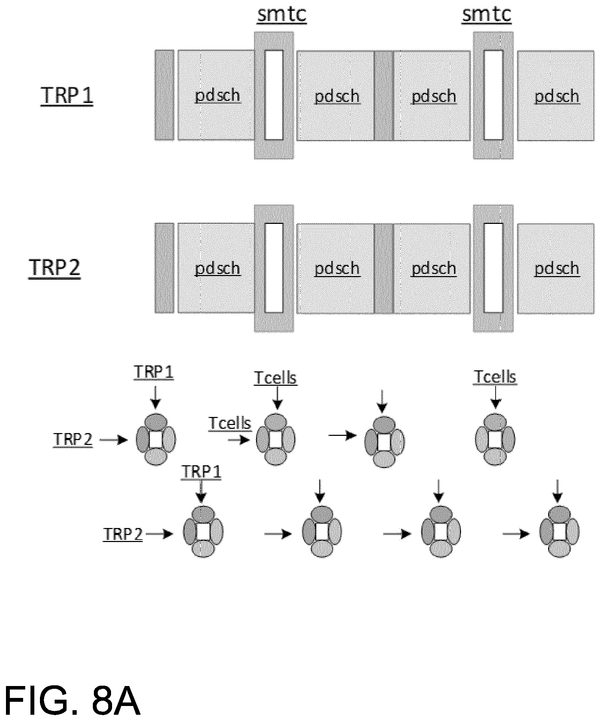

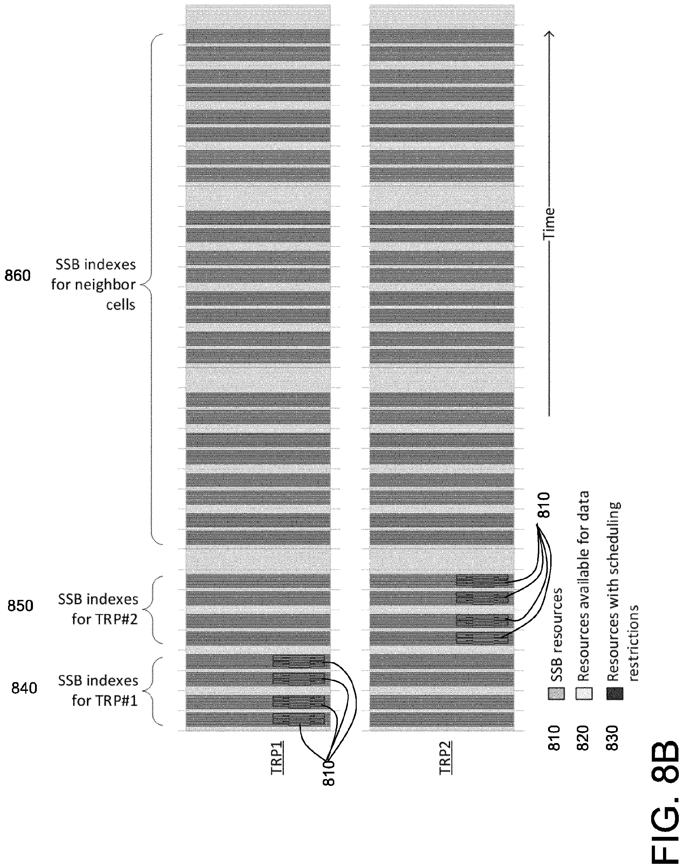

Whenever the UE is performing RRM measurements (e.g. intra-frequency measurements), the symbol(s) before and after and on which it is measuring (e.g. SSB symbols) may have scheduling restrictions, as described in Session 9.2.5.3.3 of TS 38.133, which may mean that the gNB cannot assume that the UE can receive or transmit any data during those symbols. Referring now to FIGs. 8A and 8B, illustrated is an example of scheduling restriction inefficiency for 4 layer DL during SMTC window where no data is sent. FIG. 8A illustrates one example of DL parts, UL parts and SS-burst. In between measurement times, there may be some time with data (PDSCH). In this example, measurement windows are the SS-burst, and SMTC is configured in half of the SS-bursts. Inside the SMTC, the UE is not receiving data in most of the OFDM symbols, but rather measuring neighbor cells. FIG. 8B illustrates one example of a SS-burst configuration, where 8 indices are used for TRP1 (840), 8 for TRP2 (850), and the remaining 48 indexes are used for other cells (860). FIG. 8B illustrates what may happen within measurement windows. In each set, some symbols are used for SSB (810), some are resources with scheduling restrictions (830), and some symbols are resources available for data (820).

In the example of FIG. 8B, it is assumed that all the SSB indexes are configured in the duration of the SS-burst for measurements, and that 8 indexes are used for TRP1 (840) and 8 used for TRP2 (850). The gNB may inform the UE of this by configuring SSB-ToMeasure as part of MeasObjectNR for the L3 indexes, and the information for the SSB indexes related to the serving cell may be configured in the ServingCellConfigCommon/ssb-PositionsInBurst. In this example, it may be noticed that there are only a few symbols available for scheduling (820) if the UE is configured for performing measurements on all the available SSB indexes. Without addressing the issue for multi Rx capable UE when operating with multi Rx, the restrictions may, by default, apply to either of the active Rx beams/sources.

However, when multi Rx chain UEs are considered, the scheduling restrictions may be relaxed or even removed to enable simultaneous measurements and data Rx/Tx operations. However, the 4 layer MIMO throughput may not be maintained during those measurements.

Therefore, what is needed is a method for enhancing multi-Rx operation with reduced scheduling restrictions which has the following characteristics: throughput is optimized during RRM measurements; and adaptation due to UE movement/rotation is possible. In an example embodiment, a UE may be able to perform measurement during SMTC window with respect to at least one TRP, and perform data reception with respect to at least one other TRP.

A technical effect of example embodiments of the present disclosure may be to optimize throughput during RRM measurements. A technical effect of example embodiments of the present disclosure may be to enable adaptation due to UE movement/rotation.

Scheduling restrictions as applied in RAN4 requirements may be applicable to the multi Rx scenario when a UE uses multi Rx, if those processes/restrictions are not enhanced. This may mean that both Rx streams (or active TCI states) may assume to have restrictions due to RRM measurements, and there may be no possible differentiation between the TCI states in terms of restrictions. This may have a negative impact on the overall total power (TP) and system performance, due to unnecessary scheduling limitations reducing the data TP.

A technical effect of example embodiments of the present disclosure may be to provide scheduling flexibility between the TCI states for data reception and RRM measurements.

R4-2206936 may be referred to as a summary of the Rel-16/17 UE behaviors. The two statements below show UE behaviors in multiple TRP deployment of FR1 and FR2:
"...For Case I in FR1, RRM requirements are specified assuming UE can perform SSB-based L1-RSRP simultaneously for serving cell and a cell with PCI different from serving cell in FR1.
For Case I in FR2, RRM requirements are specified in R17 assuming UE performs L1-RSRP measurements for one cell at a time..."

A basic assumption of FR2 UE operation is that a UE may measure or demodulate a signal using one Rx spatial setting and direction at a time, and from one cell at a time.

A technical effect of example embodiments of the present disclosure may be to reduce the impact of scheduling restrictions when the UE is using multi Rx.

In an example embodiment, the number of MIMO layers may be reduced based on the expected UE measurements, which may impose UE scheduling restrictions.

In an example embodiment, a UE that supports multi TRP reception from N TRPs on M panels or Rx chains for simultaneous reception may perform measurements on K panels/Rx chains, and use the remaining M-K panels/Rx chains for data reception. For such a UE, whenever the UE is scheduled using multiple TRPs for achieving N layers, the UE may still be scheduled with a reduced number of layers floor(Nlayers*(M-K)/M) during the measurement time. As an example, if a UE is scheduled with 4 layers from 2 different TRPs during normal DL symbols, the number of layers that the UE is assumed to be able to receive may be reduced to two, and the gNB may schedule that other multiple TRPs for the UE without knowledge of which panel is active. It may be noted that, in FR2, each TRP may achieve 2 layers. Accordingly, 2 TRP may enable 4 layers for transmission.

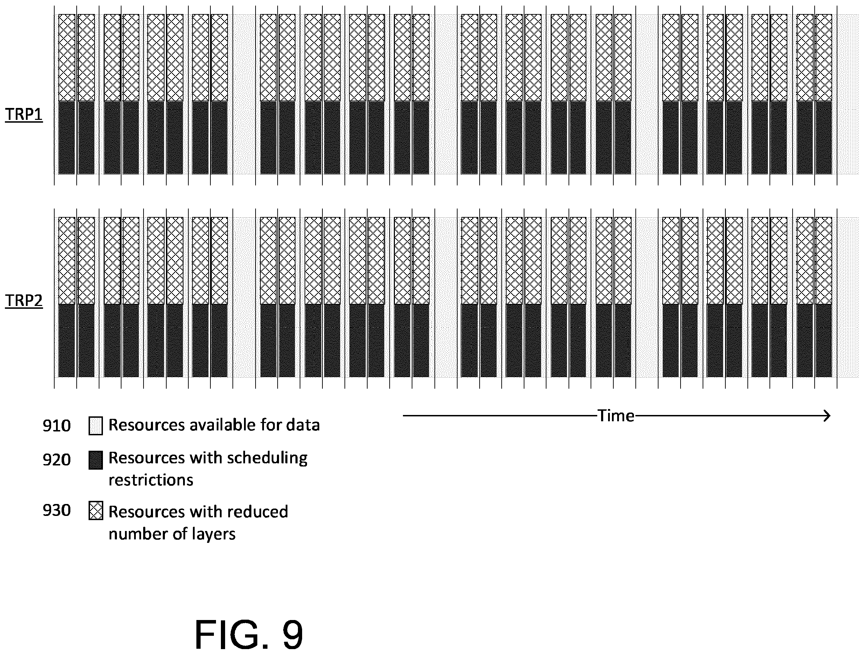

Referring now to FIG. 9, illustrated is an example embodiment where the network may exploit knowledge of the capability to receive with multiple receive chains at the UE side and schedule 2 layer data on one TRP at the time during the SSB burst. In this example the PRBs that contain SSB in frequency domain may be avoided in order to minimize interference with SSBs from neighbors. In FIG. 9, it may be noted that resources that are unavailable for data reception which may be used for RRM measurement (920) may happen simultaneously with resources that can be accessed for data reception with reduced number of layers (930). As a result, the total number of time/frequency resources with scheduling restrictions (920) may be reduced in this example in comparison with FIG. 8B, since only a part of the PRBs of a symbol containing a reference signal is restricted. It may be noted that, for OFDM symbols that do not have scheduling restriction, the number of layers may be M, while for OFDM symbols with scheduling restrictions, the number of layers may be reduced, e.g. to M/2. Resources available for data (910) are also illustrated in FIG. 9.

In an example embodiment, multiple RX may be utilized. In an example embodiment, the usage of the available Rx chains may be balanced such that one Rx chain may be used for data, while the other Rx chain may perform measurements. A technical effect of example embodiments of the present disclosure may be to not impose generic overall UE restrictions on both RXs.

In an example embodiment, the UE may operate using single downlink control information (sDCI) scheduling or multi DCI (mDCI) scheduling.

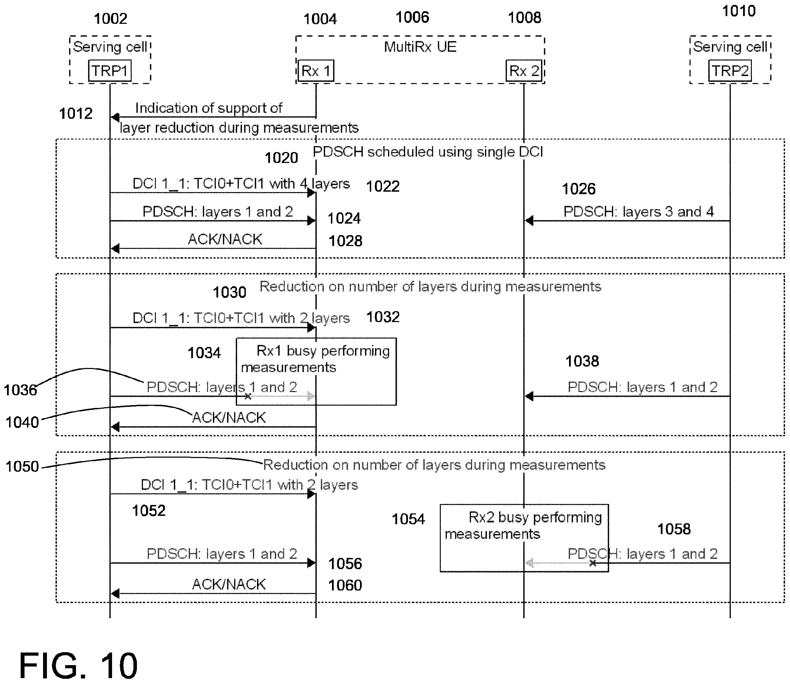

Where the UE operates using sDCI, it may be assumed that, based on the UE feedback on channel conditions, the network may schedule the UE with lower rank (e.g. 2 layer) despite the UE rank indicator. In an example embodiment, new signaling (see, e.g., 1012 in FIG. 10) may indicate to the network whether UE is restricted during the measurement occasion. Hence, this signaling may not apply to data reception capability in general, but only during the measurement occasions (like SMTC): this may be a fixed capability and general; or it may be a dynamic indication based on the UE measurement implementation.

For the detailed scheduling when applying 2 layers instead of 4 layers for single DCI, at least two options may be considered: single frequency network (SFN) deployment, and non-SFN deployment. In a SFN deployment, the network may schedule the UE from either of the TRPs with the same data. The UE may receive with no restrictions from one of the two TRPs. There may be no need for further detailing on which TRP the UE shall receive from, and on which Rx stream the UE has restrictions, and which not. In a non-SFN deployment, the network may go to 2 layer scheduling, and there may be a defined method to decide which TRP shall be assumed without restrictions on the UE side. In one alternative, the UE may indicate to the network, prior to the measurement occasion, whether scheduling restrictions apply. In another alternative, the UE may indicate to the network, prior to the measurement occasion, that there are no scheduling restrictions.

In an example embodiment, a different approach may be used for multi DCI cases. For example, the DCI may be sent independently from each TRP, and therefore in this case the network may transmit the same information from two TRPs, since the network is not aware of which direction the UE is performing measurements in/towards. In that case, in case the UE performs measurements using one Rx, the other Rx may be used for data reception in a transparent manner for the network. Alternatively, the network may transmit different data from multiple TRPs and based on the ACK responses, the network may know which TRP transmission was received.

In an example embodiment, the UE may be configured to receive N layers from M TRPs. In an example embodiment, the UE may receive N layers following normal scheduling. In an example embodiment, during measurement windows, the gNB may schedule a reduced number of layers N_{red} using all M TRPs, and the UE may use one Rx chain for performing measurements, and another for receiving data.

Referring now to FIG. 10, illustrated is an example of MIMO layer reduction during measurements for SDCI in a non-SFN scenario. Two TRPs (1002, 1010) are considered in this example, TRP1 (1402) being the anchor TRP which sends PDCCH and DCI for scheduling the UE (1006) for data on TCI0, and TRP2 (1010), which is used for additional data scheduling on TCI1. The two TRPs may be part of a same base station, or may be part of different base stations. The anchor TRP may receive control data from the network and transmit control data to the UE. The UE (1006) may be a multi RX UE comprising, at least, RX1 (1004) and RX 2 (1008).

The example of FIG. 10 is not limiting; each TRP may have several configured TCI states, and the UE may receive control or data information from different TCI states as it moves.

In the present disclosure, the terms "TRP", "transmission source", "network node", "base station", "gNB", "transmission point", "RRH", "Tx antenna", "transmission and/or reception point", and "Tx source" may be used to refer to similar entities. Accordingly, a TRP may be referred to as a transmission source, although a TRP may also be configured to perform reception. Accordingly, an anchor TRP may be referred to as an anchor transmission source. Accordingly, a TRP may be referred to as a network node. Two TRPs may belong to a same base station, or two TRPs may belong to different base stations. The term "TRP" is often used in multi RX. A TRP may be understood as a network entity that may perform transmission to a UE (e.g. DL transmission, beams, RS, etc.). Additionally or alternatively, a TRP may be understood as a network entity that may perform reception from a UE.

At 1012, the UE (1006) using Rx 1 (1004) may indicate that it supports layer reduction during measurements. This information may be communicated to the gNB either statically, by UE capability signaling, or dynamically (e.g. by use of user assistance information (UAI)). An advantage of using UAI may be that the UE may turn off the feature dynamically in case of low activity, or if power consumption needs to be reduced at a given time.

In optional example 1020, normal scheduling of the UE (1006) for PSDCH with a single DCI is described. At 1022, the DCI 1_1 may be transmitted to the UE (1004, 1006), where 4 layers may be scheduled using TCI0 and TCI1, which may be related to TRP1 (1002) and TRP2 (1010), respectively. At 1024, PDSCH may be sent from TRP1 (1002) using TCI0 with layers 1 and 2 to RX 1 (1004). Simultaneously (e.g. at the same time, or at the same OFDM symbol) with 1024, at 1026, PDSCH may be sent from TRP2 (1010) using TCI1 with layers 3 and 4 to RX 2 (1008). At 1028, the UE (1006, 1004) may confirm the correct/incorrect reception of PDSCH with a HARQ-ACK/NACK message.

In optional example 1030, the number of layers during measurements may be reduced. The measurements may be performed on SS-burst, SMTC, or channel state information reference signal (CSI-RS) using at least one Rx chain from the multi Rx UE (1006). At 1032, the DCI 1_1 may be transmitted to the UE (1006, 1004), where 2 layers may be scheduled using TCI0 and TCI1, which may be related to TRP1 (1002) and TRP2 (1010), respectively. PDCCH with DCI may be sent on orthogonal frequency-division multiplexing (OFDM) symbols that do not have scheduling restrictions, since the network may not be aware of which Rx chain is being used for measurement. At 1034, the UE (1006) may use the first Rx chain (1004) for performing measurements. As a result, Rx 1 (1004) may not be available for PDSCH/PDCCH reception, but Rx 2 (1008) may still be available. At 1036, PDSCH with layers 1 and 2 may be transmitted for the UE (1006) from TRP1 (1002) using TCI0, but may not be received from/with Rx 1 (1004), which may be busy performing measurements. Simultaneously with 1036, at 1038, PDSCH with layers 1 and 2 may be transmitted for the UE (1006, 1008) from TRP2 (1010) using TCI1. Since PDSCH from TRP1 (1002) and TRP2 (1010) may comprise of only 2 layers instead of 4, as in (1024) and (1026), Rx1 (1004) may be disabled due to measurements and the equivalent transmission rank when receiving only from Rx2 (1008) may be enough for a 2 layer transmission. At 1040, the UE (1006, 1004) may confirm the correct/incorrect reception of PDSCH with a HARQ-ACK/NACK message.

In optional example 1050, the number of layers during measurements may be reduced. The measurements may be performed on SS-burst, SMTC, or channel state information reference signal (CSI-RS) using at least one Rx chain from the multi Rx UE (1006). At 1052, the DCI 1_1 may be transmitted to the UE (1006, 1004), where 2 layers may be scheduled using TCI0 and TCI1, which are related to TRP1 (1002) and TRP2 (1010), respectively. PDCCH with DCI may be sent on OFDM symbols that do not have scheduling restrictions, since the network may not be aware of which Rx chain is being used for measurement. At 1054, the UE (1006) may use the second Rx chain (1008) for performing measurements. As a result, Rx 2 (1008) may not be available for PDSCH/PDCCH reception, but Rx 1 (1004) may still be available. At 1056, PDSCH with layers 1 and 2 may be transmitted for the UE (1006, 1004) from TRP1 (1002) using TCI0. Simultaneously with 1456, at 1058, PDSCH with layers 1 and 2 may be transmitted for the UE (1006, 1008) from TRP2 (1010) using TCI1, but may not be received from/with Rx 2 (1008), which may be busy performing measurements. Since PDSCH from TRP1 (1002) and TRP2 (1010) may be sending only 2 layers instead of 4, the equivalent transmission rank after Rx2 (1008) may be disabled due to measurements is enough for a 2 layer reception using Rx1 (1004). At 1060, the UE (1006, 1004) may confirm the correct/incorrect reception of PDSCH with a HARQ-ACK/NACK message.

In an example embodiment, a UE may arbitrarily decide which Rx chain to use. The UE may not be required to inform the network of its choice of Rx chain. In other words, the network may not be aware of which Rx chain the UE uses.

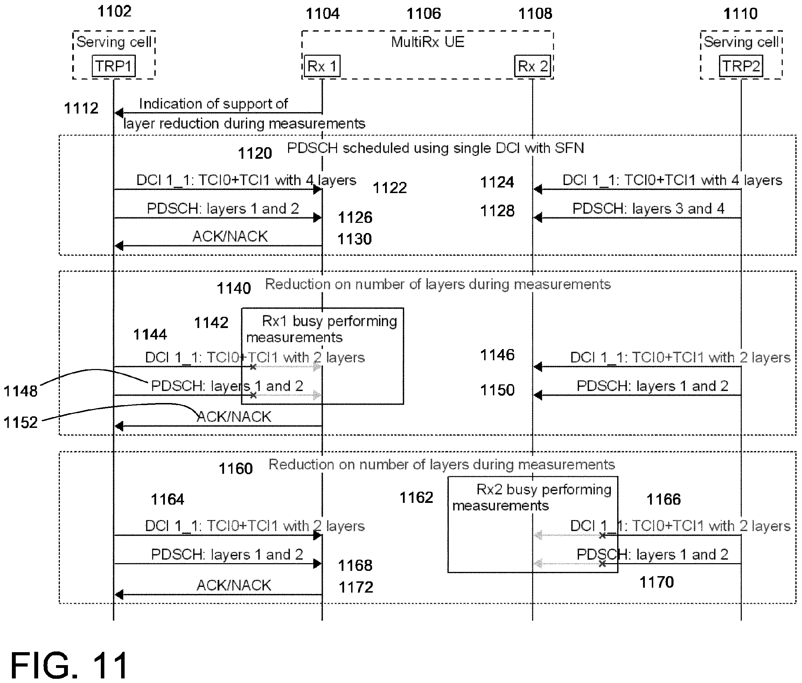

Referring now to FIG. 11, illustrated is an example of MIMO layer reduction during measurements for SDCI in a SFN scenario. Two TRPs are considered, TRP1 (1102) being the anchor TRP which may receive PUCCH and HARQ feedback. TRP2 (1110) may be used for additional data scheduling on TCI1. The UE (1106) may be a multi RX UE comprising, at least, RX1 (1104) and RX 2 (1108).

At 1112, the UE (1106, 1104) may indicate the support of layer reduction during measurements. This information may be communicated to the gNB either statically, by UE capability signaling, or dynamically (e.g. by use of UAI). An advantage of using UAI may be that the UE may turn off the feature dynamically in case of low activity, or if power consumption needs to be reduced at a given time.

In optional example 1120, normal scheduling of the UE (1106) for PSDCH with a single DCI with SFN is described. At 1122, the DCI 1_1 may be transmitted to the UE (1106, 1104) with TRP1 (1102), where 4 layers may be scheduled using TCI0 and TCI1, which may be related to TRP1 (1102) and TRP2 (1110), respectively. At 1124, the DCI 1_1 may also be transmitted to the UE (1106, 1108) with TRP2 (1110). In other words, PDCCH containing the same information may be sent by both TRPs for signaling robustness. At 1126, PDSCH may be sent from TRP1 (1102) to the UE (1106, 1104) using TCI0 with layers 1 and 2. Simultaneously with 1126, at 1128, PDSCH may be sent from TRP2 (1110) to the UE (1106, 1108) using TCI1 with layers 3 and 4. At 1130, the UE (1106, 1104) may confirm the correct/incorrect reception of PDSCH with a HARQ-ACK/NACK message.

In optional example 1140, the number of layers during measurements may be reduced. Measurements may be performed on SS-burst, SMTC, or CSI-RS using at least one Rx chain from the multi Rx UE. At 1142, the UE (1106) may use the first Rx chain (1104) for performing measurements. As a result, Rx 1 (1104) may not be available for PDSCH/PDCCH reception, but Rx 2 (1108) may still be available. At 1144, the DCI 1_1 may be transmitted to the UE (1106) from/by the TRP1 (1102), where 2 layers may be scheduled using TCI0 and TCI1, which are related to TRP1 (1102) and TRP2 (1110), respectively. PDCCH containing DCI (1144) may not be received by Rx 1 (1104) since it may be busy performing measurements. At 1146, the PDCCH containing DCI 1_1 may be transmitted to the UE (1104) from/by the TRP2 (1110). In other words, PDCCH may be sent by both TRPs for signaling robustness. DCI may be received by Rx 2 (1108), which may be available for PDCCH/PDSCH reception. Since SFN PDCCH is used in this scenario, PDCCH with DCI may be sent also during restricted OFDM symbols, since there may be at least one Rx chain available for PDCCH/PDSCH reception. At 1148, PDSCH with layers 1 and 2 may be transmitted for the UE (1106) from TRP1 (1102) using TCI0, but may not be received from/with Rx 1 (1104), which may be busy performing measurements. Simultaneously with 1148, at 1150, PDSCH with layers 1 and 2 may be transmitted for the UE (1106) from TRP2 (1110) using TCI1. Since PDSCH from TRP1 (1102) and TRP2 (1110) may be sent using only 2 layers instead of 4, the equivalent transmission rank after Rx1 (1104) may be disabled due to measurements is enough for a 2 layer transmission using Rx2 (1108). At 1152, the UE (1106, 1104) may confirm the correct/incorrect reception of PDSCH with a HARQ-ACK/NACK message.

In optional example 1160, the number of layers during measurements may be reduced. Measurements may be performed on SS-burst, SMTC, or CSI-RS using at least one Rx chain from the multi Rx UE. At 1162, the UE (1106) may use the second Rx chain (1108) for performing measurements. As a result, Rx 2 (1108) may not be available for PDSCH/PDCCH reception, but Rx 1 (1104) may still be available. At 1564, the DCI 1_1 may be transmitted to the UE (1106) by TRP1 (1102), where 2 layers may be scheduled using TCI0 and TCI1, which may be related to TRP1 (1102) and TRP2 (1110), respectively. PDCCH containing DCI may be received by Rx 1 (1104), which may be available for PDCCH/PDSCH reception. At 1166, the PDCCH containing DCI 1_1 may be transmitted to the UE (1106) by TRP2 (1110). In other words, PDCCH may be sent by both TRPs for signaling robustness. DCI may not be received by Rx 2 (1108) since it may be busy performing measurements. Since SFN PDCCH is used in this scenario, PDCCH with DCI may be sent also during restricted OFDM symbols, since there will be at least one Rx chain available for PDCCH/PDSCH reception. At 1168, PDSCH with layers 1 and 2 may be transmitted for the UE (1106) from TRP1 (1102) using TCI0. Simultaneously with 1168, at 1170, PDSCH with layers 1 and 2 may be transmitted for the UE (1106) from TRP2 (1110) using TCI1, but may not be received from/with Rx 2 (1108), which may be busy performing measurements. Since PDSCH from TRP1 (1102) and TRP2 (1110) may only be sending 2 layers instead of 4, the equivalent transmission rank after Rx1 (1104) may be disabled due to measurements is enough for a 2 layer transmission using Rx2 (1108). At 1172, the UE (1106, 1104) may confirm the correct/incorrect reception of PDSCH with a HARQ-ACK/NACK message.

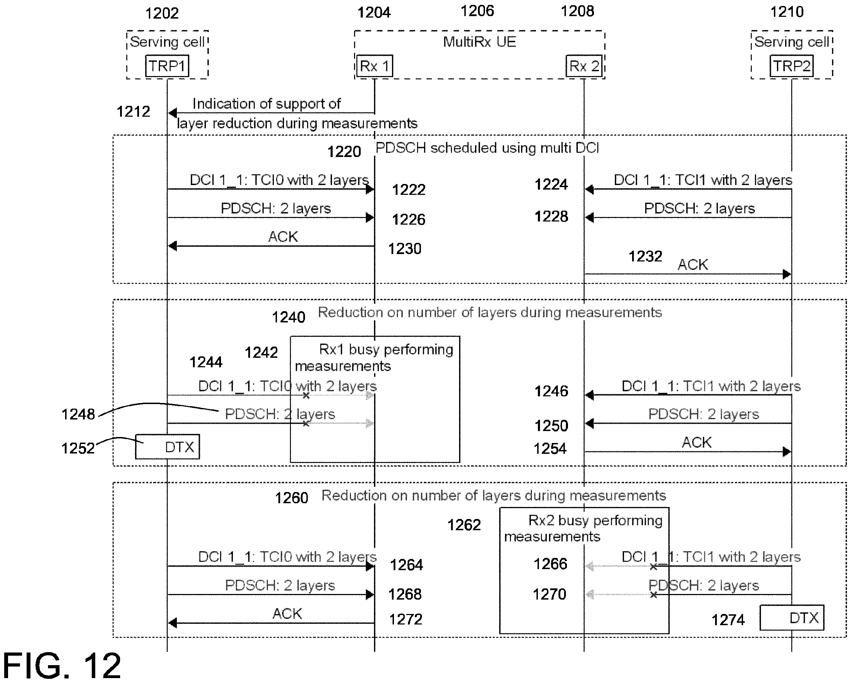

Referring now to FIG. 12, illustrated is an example of MIMO layer reduction during measurements for mDCI scenario. Two TRPs are considered, where both TRPs have independent PDCCH and DCI scheduling, which may occur simultaneously. The UE (1206) may be a multi RX UE comprising, at least, RX1 (1204) and RX 2 (1208).

At 1212, the UE (1206, 1204) may indicate the support of layer reduction during measurements. This information may be communicated to the gNB either statically, by UE capability signaling, or dynamically (e.g. by use of user assistance information UAI). An advantage of using UAI maybe that the UE may turn off the feature dynamically in case of low activity or if power consumption needs to be reduced at a given time

In optional example 1220, normal scheduling of the UE (1206) with multi DCI is described. At 1222, the DCI 1_1 may be transmitted to the UE (1206) from TRP1 (1202), where 2 layers may be scheduled using TCI0, which may be related to TRP1 (1202). The two layers for TRP1 may be the same as or different from the two layers for TRP2. At 1224, the DCI 1_1 may be transmitted to the UE (1206) from TRP2 (1210), where 2 layers may be scheduled using TCI1, which may be related to TRP2 (1210). At 1226, PDSCH may be sent to the UE (1206) from TRP1 (1202) using TCI0 with 2 layers. Simultaneously with 1226, at 1228, PDSCH may be sent from TRP2 (1210) to the UE (1206) using TCI1 with 2 layers. At 1230, the UE (1206, 1204) may confirm the correct/incorrect reception of PDSCH from TRP1 (1202) with a HARQ-ACK/NACK message. At 1232, the UE (1206, 1208) may confirm the correct/incorrect reception of PDSCH from TRP2 (1210) with a HARQ-ACK/NACK message.

In optional example 1240, reducing the number of layers during measurements is described. Measurements may be performed on SS-burst, SMTC, or CSI-RS using at least one Rx chain from the multi Rx UE. At 1242, the UE (1206) may use the first Rx chain (1204) for performing measurements. As a result, Rx 1 (1204) may not be available for PDSCH/PDCCH reception, but Rx 2 (1208) may still be available. At 1244, the DCI 1_1 may be transmitted to the UE (1206) from TRP1 (1202), where 2 layers may be scheduled using TCI0, which may be related to TRP1 (1202). Since Rx 1 (1204) may be busy performing measurements, the UE (1206) might not receive the scheduling message from the network. At 1246, the DCI 1_1 may be transmitted to the UE (1206) from TRP2 (1210), where 2 layers may be scheduled using TCI1, which may be related to TRP2 (1210). At 1648, PDSCH may be sent from TRP1 (1202) to the UE (1206) using TCI0 with 2 layers. Since Rx 1 (1204) may be busy performing measurements, the UE (1206) may not be able to receive PDSCH from TRP1 (1202). Simultaneously with 1248, at 1250, PDSCH may be sent from TRP2 (1210) to the UE (1206) using TCI1 with 2 layers. The network may choose to send the same PDSCH data at 1248 and 1250 (e.g. in a latency sensitive scenario). At 1252, discontinuous transmission (DTX) may be performed, for example in response to not receiving ACK/NACK within a certain time period. Since the UE (1206) may not have received the DCI 1_1 with PDSCH scheduling, it may not send HARQ feedback, and the network may interpret that as an implicit NACK. In that example, the DTX may be ignored by the network when it is using a DTX metric for determining link failure. At 1254, the UE (1206, 1208) may confirm the correct/incorrect reception of PDSCH from TRP2 (1210) with a HARQ-ACK/NACK message.

In optional example 1260, reducing the number of layers during measurements is described. Measurements may be performed on SS-burst, SMTC, or CSI-RS using at least one Rx chain from the multi Rx UE. At 1262, the UE (1206) may use the second Rx chain (1208) for performing measurements. As a result, Rx 2 (1208) may not be available for PDSCH/PDCCH reception, but Rx 1 (1204) may still be available. At 1264, the DCI 1_1 may be transmitted to the UE (1206) from TRP1 (1202), where 2 layers may be scheduled using TCI0, which may be related to TRP1 (1202). At 1266, the DCI 1_1 may be transmitted to the UE (1206) from TRP2 (1210), where 2 layers may be scheduled using TCI1, which may be related to TRP2 (1210). Since Rx 2 (1208) may be busy performing measurements, the UE (1206) might not receive the scheduling message from the network. At 1268, PDSCH may be sent from TRP1 (1202) to the UE (1206) using TCI0 with 2 layers. Simultaneously with 1268, at 1270, PDSCH may be sent from TRP2 (1210) to the UE (1206) using TCI1 with 2 layers. Since Rx 1 (1204) is busy performing measurements, the UE (1206) may not be able to receive PDSCH from TRP1 (1202). The network may choose to send the same PDSCH data at 1268 and 1270 (e.g. in latency sensitive scenario). At 1272, the UE (1206, 1204) may confirm the correct/incorrect reception of PDSCH from TRP1 (1202) with a HARQ-ACK/NACK message. At 1274, DTX may be performed. Since the UE (1206, 1208) may not have received the DCI 1_1 with PDSCH scheduling, it may not send HARQ feedback, and the network may interpret that as an implicit NACK. In that example, the DTX may be ignored by the network when it is using DTX metric for determining link failure.

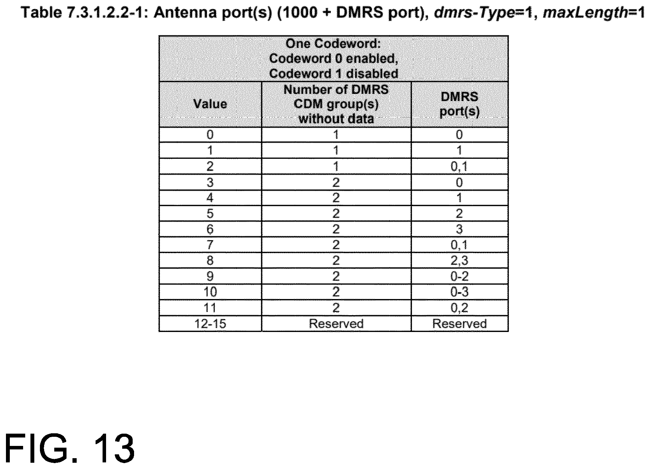

In an sDCI scenario (e.g. FIGs. 10 and 10), the DCI 1_1 message used for scheduling PDSCH may include information about the antenna ports and number of layers. This is done by the configuration of the DMRS in tables 7.3.1.2.2-1 to 7.3.1.2.2-5 in TS 38.212, where the number of DMRS ports may indicate the number of transmission layers. For example, configuration 10 from Table 7.3.1.2.2-1 of TS 38.212 (see FIG. 13) may be configured in DCI 1_1, and ports 0 to 3 may be used for transmitting 4 layers during normal PDSCH transmissions. Then during measurements, where the number of layers must be reduced, the configuration 7 with ports 0 and 1 may be used for transmitting 2 layers during OFDM symbols with restriction on number of layers with single DCI.

Example embodiments of the present disclosure may be mapped to the RAN4 RRM specification 38.133, by updating scheduling restrictions when the UE is indicated with 2 TCIs for simultaneous reception.

For example, when the UE is configured single DCI for simultaneous reception in DL, the following scheduling restrictions may apply: the UE may not be available to receive PDCCH during the symbols in which the reference signals are to be measured, and 1 symbol before or after those symbols; and/or the number of MIMO layers for PDSCH may be reduced during the symbols in which the reference signals are to be measured, and 1 symbol before or after those symbols. If the UE is scheduled using N layers during symbols without restrictions, the UE may only be scheduled with floor(N/2) layers during symbols with restrictions, if 2 TRPs are considered. Other numbers of TRPs may be considered in the future, if 3GPP provides support for that.

For example, when the UE is configured with single DCI in a SFN network: no scheduling restrictions may be needed for PDCCH; and/or the number of MIMO layers for PDSCH may be reduced during the symbols in which the reference signals are to be measured, and 1 symbol before or after those symbols. If the UE is scheduled using N layers during symbols without restrictions, the UE may only be scheduled with floor(N/2) layers during symbols with restrictions.

For example, when the UE is configured with multi DCI for simultaneous reception in DL, the following scheduling restrictions may apply: the UE may be capable of receiving PDCCH and PDSCH from at least one of the available TCI states.

A technical effect of example embodiments of the present disclosure may be to provide means for scheduling the UE during periods when no data would be available at the UE. That can have good network impact, since the symbols containing SSBs have scheduling restrictions for most UEs in a crowded network. Additionally, if the UE has latency sensitive data, the UE may at least have an opportunity to send data with a reduced data rate.

A technical effect of example embodiments of the present disclosure may be to lower complexity, and enabling an almost transparent implementation for the UE. Since there is no need to identify which of the Rx chains and TCI states are available, by the UE, the device sweeping strategy may not be affected when using this method, which may have the technical effect of leaving implementation freedom for the UE.

Example embodiments of the present disclosure may be applicable to Internet of Things (IoT) devices. Additionally or alternatively, example embodiments of the present disclosure may be applicable to ultra-reliable low latency communications (URLLC) devices.

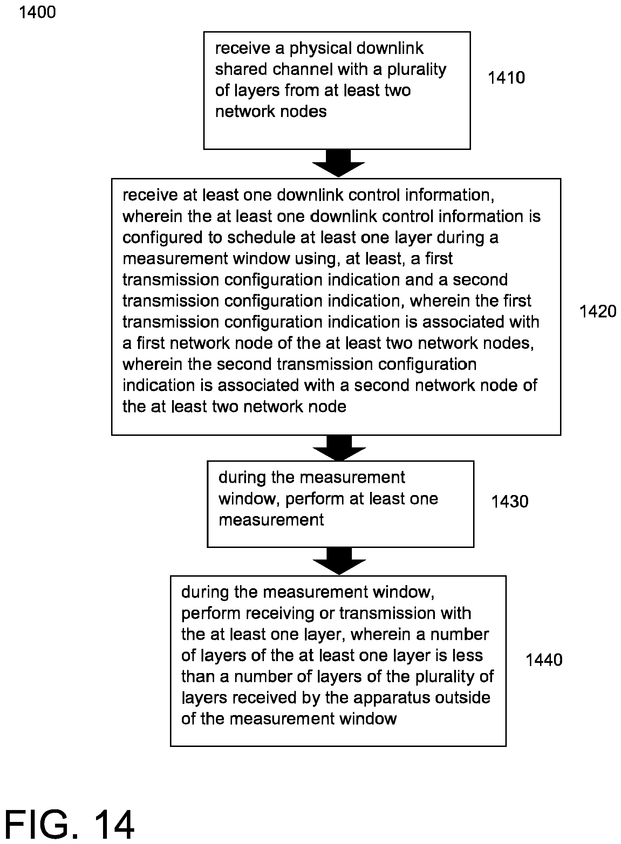

FIG. 14 illustrates the potential steps of an example method 1400. The example method 1400 may include: receiving a physical downlink shared channel with a plurality of layers from at least two network nodes, 1410; receiving at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes, 1420; during the measurement window, performing at least one measurement, 1430; and during the measurement window, receiving or transmitting with the at least one layer, wherein a number of layers of the at least one layer is less than a number of layers of the plurality of layers received by the apparatus (e.g. a user equipment) outside of the measurement window, 1440. The example method 1400 may be performed, for example, with a UE.

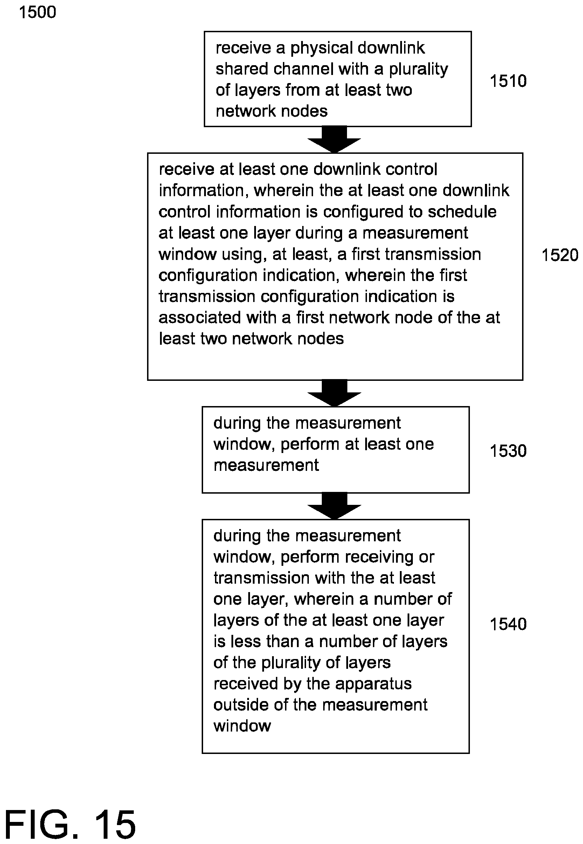

FIG. 15 illustrates the potential steps of an example method 1500. The example method 1500 may include: receiving a physical downlink shared channel with a plurality of layers from at least two network nodes, 1510; receiving at least one downlink control information, wherein the at least one downlink control information is configured to schedule at least one layer during a measurement window using, at least, a first transmission configuration indication, wherein the first transmission configuration indication is associated with a first network node of the at least two network nodes, 1520; during the measurement window, performing at least one measurement, 1530; and during the measurement window, receiving or transmitting with the at least one layer, wherein a number of layers of the at least one layer is less than a number of layers of the plurality of layers received by the apparatus (e.g. a user equipment) outside of the measurement window, 1540. The example method 1500 may be performed, for example, with a UE.

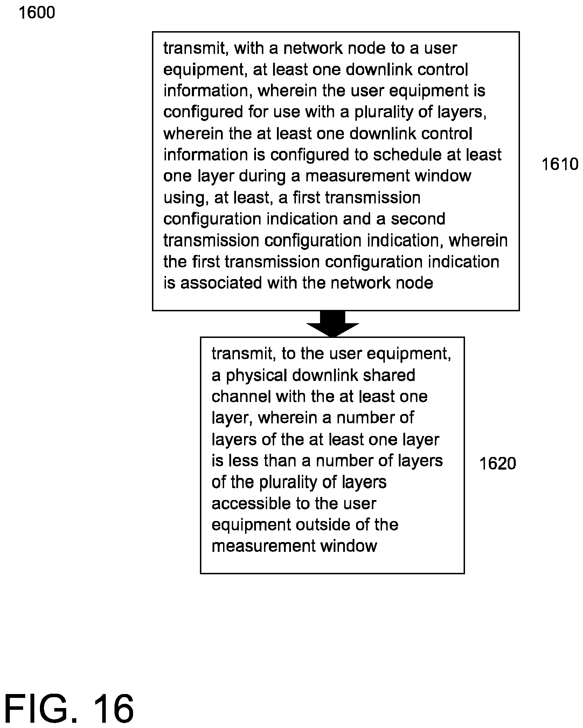

FIG. 16 illustrates the potential steps of an example method 1600. The example method 1600 may include: transmitting, with a network node to a user equipment, at least one downlink control information, wherein the user equipment is configured for use with a plurality of layers, wherein the at least one downlink control information is configured to schedule at least one layer during a measurement window using, at least, a first transmission configuration indication and a second transmission configuration indication, wherein the first transmission configuration indication is associated with the network node, 1610; and transmitting, to the user equipment, a physical downlink shared channel with the at least one layer, wherein a number of layers of the at least one layer is less than a number of layers of the plurality of layers accessible to the user equipment outside of the measurement window, 1620. The example method 1600 may be performed, for example, with a TRP, network node, transmission source, transmission point, reception point, base station, Tx antenna, Tx source, anchor TRP, etc. A network node may be any entity operating within a network.

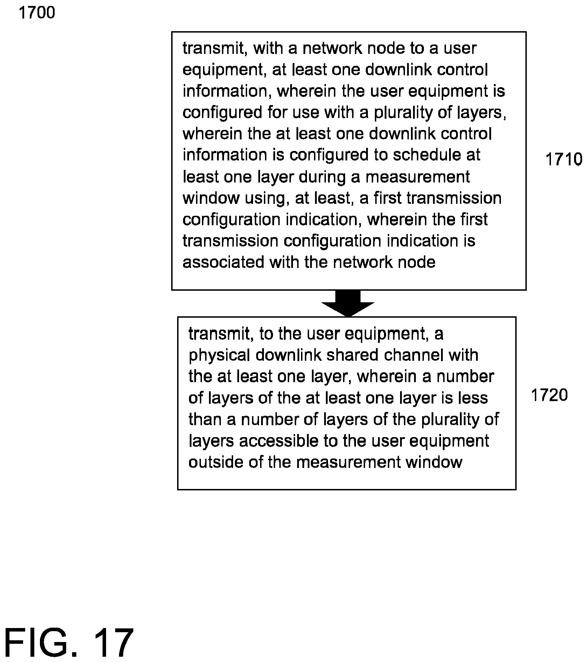

FIG. 17 illustrates the potential steps of an example method 1700. The example method 1700 may include: transmitting, with a network node to a user equipment, at least one downlink control information, wherein the user equipment is configured for use with a plurality of layers, wherein the at least one downlink control information is configured to schedule at least one layer during a measurement window using, at least, a first transmission configuration indication, wherein the first transmission configuration indication is associated with the network node, 1710; and transmitting, to the user equipment, a physical downlink shared channel with the at least one layer, wherein a number of layers of the at least one layer is less than a number of layers of the plurality of layers accessible to the user equipment outside of the measurement window, 1720. The example method 1700 may be performed, for example, with a TRP, network node, transmission source, transmission point, reception point, base station, Tx antenna, Tx source, anchor TRP, etc.

In accordance with one example embodiment, an apparatus may comprise: at least one processor; and at least one memory storing instructions that, when executed by the at least one processor, cause the apparatus at least to: receive a physical downlink shared channel with a plurality of layers from at least two network nodes; receive at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, perform at least one measurement; and during the measurement window, perform receiving or transmission with the at least one layer, wherein a number of layers of the at least one layer may be less than a number of layers of the plurality of layers received by the apparatus outside of the measurement window.

The example apparatus may be further configured to: transmit, to at least one of the at least two network nodes, an indication of support for layer reduction during the measurement window.

The indication of support for layer reduction during the measurement window may comprise at least one of: a capability indication, or user assistance information.

The at least one measurement may be performed based on at least one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the apparatus is required to perform measurements.

The at least one measurement may be performed with a first receiver chain, wherein the receiving with the at least one layer may be performed with a second receiver chain.

The example apparatus may be further configured to: determine to use the first receiver chain to perform the at least one measurement; and determine to use the second receiver chain to receive with the at least one layer.

The physical downlink shared channel may be received with the at least one layer from at least one of: the first network node, or the second network node.

The example apparatus may be further configured to: transmit, to an anchor network node, one of: an acknowledgment, or a negative acknowledgement with respect to the received physical downlink shared channel received with the at least one layer.

The at least two network nodes may be non-collocated.

The example apparatus may be using single downlink control information scheduling.

The at least one downlink control information may be received from an anchor network node of the at least two network nodes.

The example apparatus may be operating in a non-single frequency network.

The example apparatus may be operating in a single frequency network.

The at least one downlink control information may be received from a same network node, of the at least two network nodes, as the physical downlink shared channel.

In accordance with one aspect, an example method may be provided comprising: receiving, with a user equipment, a physical downlink shared channel with a plurality of layers from at least two network nodes; receiving at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, performing at least one measurement; and during the measurement window, performing receiving or transmission with the at least one layer, wherein a number of layers of the at least one layer may be less than a number of layers of the plurality of layers received by the user equipment outside of the measurement window.

The example method may further comprise: transmitting, to at least one of the at least two network nodes, an indication of support for layer reduction during the measurement window.

The indication of support for layer reduction during the measurement window may comprise at least one of: a capability indication, or user assistance information.

The at least one measurement may be performed based on at least one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the user equipment may be required to perform measurements.

The at least one measurement may be performed with a first receiver chain of the user equipment, wherein the receiving with the at least one layer may be performed with a second receiver chain of the user equipment.

The example method may further comprise: determining to use the first receiver chain to perform the at least one measurement; and determining to use the second receiver chain to receive with the at least one layer.

The physical downlink shared channel may be received with the at least one layer from at least one of: the first network node, or the second network node.

The example method may further comprise: transmitting, to an anchor network node, one of: an acknowledgment, or a negative acknowledgement with respect to the received physical downlink shared channel received with the at least one layer.

The at least two network nodes may be non-collocated.

The user equipment may be using single downlink control information scheduling.

The at least one downlink control information may be received from an anchor network node of the at least two network nodes.

The user equipment may be operating in a non-single frequency network.

The user equipment may be operating in a single frequency network.

The at least one downlink control information may be received from a same network node, of the at least two network nodes, as the physical downlink shared channel.

In accordance with one example embodiment, an apparatus may comprise: circuitry configured to perform: receiving, with a user equipment, a physical downlink shared channel with a plurality of layers from at least two network nodes; circuitry configured to perform: receiving at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; circuitry configured to perform: during the measurement window, performing at least one measurement; and circuitry configured to perform: during the measurement window, performing receiving or transmission with the at least one layer, wherein a number of layers of the at least one layer may be less than a number of layers of the plurality of layers received by the user equipment outside of the measurement window.

In accordance with one example embodiment, an apparatus may comprise: processing circuitry; memory circuitry including computer program code, the memory circuitry and the computer program code configured to, with the processing circuitry, enable the apparatus to: receive a physical downlink shared channel with a plurality of layers from at least two network nodes; receive at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, perform at least one measurement; and during the measurement window, perform receiving or transmission with the at least one layer, wherein a number of layers of the at least one layer may be less than a number of layers of the plurality of layers received by the apparatus outside of the measurement window.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: receiving a physical downlink shared channel with a plurality of layers from at least two network nodes; receiving at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, at least one measurement; and during the measurement window, receiving or transmission with the at least one layer, wherein a number of layers of the at least one layer may be less than a number of layers of the plurality of layers received by the apparatus outside of the measurement window.

The means may be further configured to perform: transmitting, to at least one of the at least two network nodes, an indication of support for layer reduction during the measurement window.

The indication of support for layer reduction during the measurement window may comprise at least one of: a capability indication, or user assistance information.

The at least one measurement may be performed based on at least one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the apparatus is required to perform measurements.

The at least one measurement may be performed with a first receiver chain, wherein the receiving with the at least one layer may be performed with a second receiver chain.

The means may be further configured to perform: determining to use the first receiver chain to perform the at least one measurement; and determining to use the second receiver chain to receive with the at least one layer.

The physical downlink shared channel may be received with the at least one layer from at least one of: the first network node, or the second network node.

The means may be further configured to perform: transmitting, to an anchor network node, one of: an acknowledgment, or a negative acknowledgement with respect to the received physical downlink shared channel received with the at least one layer.

The at least two network nodes may be non-collocated.

The apparatus may be using single downlink control information scheduling.

The at least one downlink control information may be received from an anchor network node of the at least two network nodes.

The apparatus may be operating in a non-single frequency network.

The apparatus may be operating in a single frequency network.

The at least one downlink control information may be received from a same network node, of the at least two network nodes, as the physical downlink shared channel.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause receiving, with a user equipment, of a physical downlink shared channel with a plurality of layers from at least two network nodes; cause receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, perform at least one measurement; and during the measurement window, cause performing of receiving or transmission with the at least one layer, wherein a number of layers of the at least one layer may be less than a number of layers of the plurality of layers received by the user equipment outside of the measurement window.

In accordance with one example embodiment, a non-transitory computer-readable medium comprising program instructions stored thereon for performing at least the following: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

In accordance with another example embodiment, a non-transitory program storage device readable by a machine may be provided, tangibly embodying instructions executable by the machine for performing operations, the operations comprising: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

In accordance with another example embodiment, a non-transitory computer-readable medium comprising instructions that, when executed by an apparatus, cause the apparatus to perform at least the following: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

A computer implemented system comprising: at least one processor and at least one non-transitory memory storing instructions that, when executed by the at least one processor, cause the system at least to perform: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

A computer implemented system comprising: means for causing receiving, with a user equipment, of a physical downlink shared channel with a plurality of layers from at least two network nodes; means for causing receiving of at least one downlink control information, wherein the at least one downlink control information may be configured to schedule at least one layer during a measurement window using, at least, a first transmission configuration indication and a second transmission configuration indication, wherein the first transmission configuration indication may be associated with a first network node of the at least two network nodes, wherein the second transmission configuration indication may be associated with a second network node of the at least two network nodes; means for during the measurement window, performing at least one measurement; and means for during the measurement window, causing performing of receiving or transmission with the at least one layer, wherein a number of layers of the at least one layer may be less than a number of layers of the plurality of layers received by the user equipment outside of the measurement window.

In accordance with one example embodiment, an apparatus may comprise: at least one processor; and at least one memory storing instructions that, when executed by the at least one processor, cause the apparatus at least to: receive a physical downlink shared channel with a plurality of layers from at least two network nodes; receive at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, perform at least one measurement; and during the measurement window, perform receiving or transmission with the at least one layer, wherein a number of layers of the at least one layer may be less than a number of layers of the plurality of layers received by the apparatus outside of the measurement window.

The example apparatus may be further configured to: transmit, to at least one of the at least two network nodes, an indication of support for layer reduction during the measurement window.

The indication of support for layer reduction during the measurement window may comprise at least one of: a capability indication, or user assistance information.

The at least one measurement may be performed on one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the apparatus is required to perform measurements.

The at least one measurement may be performed with a first receiver chain, wherein the receiving with the at least one layer may be performed with a second receiver chain.

The example apparatus may be further configured to: determine to use the first receiver chain to perform the at least one measurement; and determine to use the second receiver chain to receive with the at least one layer.

The example apparatus may be further configured to: transmit, to the first network node, one of: an acknowledgment, or a negative acknowledgement with respect to the received physical downlink shared channel received with the at least one layer.

The apparatus may be using multiple downlink control information scheduling.

In accordance with one aspect, an example method may be provided comprising: receiving, with a user equipment, a physical downlink shared channel with a plurality of layers from at least two network nodes; receiving at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, performing at least one measurement; and during the measurement window, performing receiving or transmission with the at least one layer, wherein a number of layers of the at least one layer may be less than a number of layers of the plurality of layers received by the user equipment outside of the measurement window.

The example method may further comprise: transmitting, to at least one of the at least two network nodes, an indication of support for layer reduction during the measurement window.

The indication of support for layer reduction during the measurement window may comprise at least one of: a capability indication, or user assistance information.

The at least one measurement may be performed on one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the user equipment is required to perform measurements.

The at least one measurement may be performed with a first receiver chain of the user equipment, wherein the receiving with the at least one layer may be performed with a second receiver chain of the user equipment.

The example method may further comprise: determining to use the first receiver chain to perform the at least one measurement; and determining to use the second receiver chain to receive with the at least one layer.

The example method may further comprise: transmitting, to the first network node, one of: an acknowledgment, or a negative acknowledgement with respect to the received physical downlink shared channel received with the at least one layer.

The user equipment may be using multiple downlink control information scheduling.

In accordance with one example embodiment, an apparatus may comprise: circuitry configured to perform: receiving, with a user equipment, a physical downlink shared channel with a plurality of layers from at least two network nodes; circuitry configured to perform: receiving at least one downlink control information, wherein the at least one downlink control information may be configured to schedule at least one layer during a measurement window using, at least, a first transmission configuration indication, wherein the first transmission configuration indication may be associated with a first network node of the at least two network nodes; circuitry configured to perform: during the measurement window, performing at least one measurement; and circuitry configured to perform: during the measurement window, performing receiving or transmission with the at least one layer, wherein a number of layers of the at least one layer may be less than a number of layers of the plurality of layers received by the user equipment outside of the measurement window.

In accordance with one example embodiment, an apparatus may comprise: processing circuitry; memory circuitry including computer program code, the memory circuitry and the computer program code configured to, with the processing circuitry, enable the apparatus to: receive a physical downlink shared channel with a plurality of layers from at least two network nodes; receive at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, perform at least one measurement; and during the measurement window, perform receiving or transmission with the at least one layer, wherein a number of layers of the at least one layer may be less than a number of layers of the plurality of layers received by the apparatus outside of the measurement window.

In accordance with one example embodiment, an apparatus may comprise means for performing: receiving a physical downlink shared channel with a plurality of layers from at least two network nodes; receiving at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, at least one measurement; and during the measurement window, receiving or transmission with the at least one layer, wherein a number of layers of the at least one layer may be less than a number of layers of the plurality of layers received by the apparatus outside of the measurement window.

The means may be further configured to perform: transmitting, to at least one of the at least two network nodes, an indication of support for layer reduction during the measurement window.

The indication of support for layer reduction during the measurement window may comprise at least one of: a capability indication, or user assistance information.

The at least one measurement may be performed on one of: at least one synchronization signal burst, at least one synchronization signal block measurement timing configuration, at least one synchronization configuration, at least one physical broadcast channel block measurement timing configuration, at least one measurement timing configuration, at least one channel state information reference signal, or at least one reference signal, other than the at least one channel state information reference signal, of which the apparatus is required to perform measurements.

The at least one measurement may be performed with a first receiver chain, wherein the receiving with the at least one layer may be performed with a second receiver chain.

The means may be further configured to perform: determining to use the first receiver chain to perform the at least one measurement; and determining to use the second receiver chain to receive with the at least one layer.

The means may be further configured to perform: transmitting, to the network node, one of: an acknowledgment, or a negative acknowledgement with respect to the received physical downlink shared channel received with the at least one layer.

The apparatus may be using multiple downlink control information scheduling.

In accordance with one example embodiment, a non-transitory computer-readable medium comprising instructions stored thereon which, when executed with at least one processor, cause the at least one processor to: cause receiving, with a user equipment, of a physical downlink shared channel with a plurality of layers from at least two network nodes; cause receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, perform at least one measurement; and during the measurement window, cause performing of receiving or transmission with the at least one layer, wherein a number of layers of the at least one layer may be less than a number of layers of the plurality of layers received by the user equipment outside of the measurement window.

In accordance with one example embodiment, a non-transitory computer-readable medium comprising program instructions stored thereon for performing at least the following: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

In accordance with another example embodiment, a non-transitory program storage device readable by a machine may be provided, tangibly embodying instructions executable by the machine for performing operations, the operations comprising: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

In accordance with another example embodiment, a non-transitory computer-readable medium comprising instructions that, when executed by an apparatus, cause the apparatus to perform at least the following: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

A computer implemented system comprising: at least one processor and at least one non-transitory memory storing instructions that, when executed by the at least one processor, cause the system at least to perform: causing receiving, with a user equipment, of a physical downlink shared channel with a plurality of layers from at least two network nodes; causing receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; during the measurement window, performing at least one measurement; and during the measurement window, causing performing of receiving or transmission with the at least one layer, wherein a number of layers of the at least one layer may be less than a number of layers of the plurality of layers received by the user equipment outside of the measurement window.

A computer implemented system comprising: means for causing receiving, with a user equipment, of a physical downlink shared channel with a plurality of layers from at least two network nodes; means for causing receiving of at least one downlink control information, wherein the at least one downlink control information may be configured to schedule at least one layer during a measurement window using, at least, a first transmission configuration indication, wherein the first transmission configuration indication may be associated with a first network node of the at least two network nodes; means for during the measurement window, performing at least one measurement; and means for during the measurement window, causing performing of receiving or transmission with the at least one layer, wherein a number of layers of the at least one layer may be less than a number of layers of the plurality of layers received by the user equipment outside of the measurement window.

In accordance with one example embodiment, an apparatus may comprise: at least one processor; and at least one memory storing instructions that, when executed by the at least one processor, cause the apparatus at least to: transmit, to a user equipment, at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the apparatus; and transmit, to the user equipment, a physical downlink shared channel with the at least one layer, wherein a number of layers of the at least one layer may be less than a number of layers of the plurality of layers accessible to the user equipment outside of the measurement window.

The example apparatus may be further configured to: receive, from the user equipment, an indication of support for layer reduction during the measurement window.

The indication of support for layer reduction during the measurement window may comprise at least one of: a capability indication, or user assistance information.

The example apparatus may be further configured to: receive, from the user equipment, a message via the at least one layer.

The example apparatus may be further configured to: receive, from the user equipment, one of: an acknowledgment, or a negative acknowledgement.

The one of the acknowledgement or the negative acknowledgment may be associated with the transmitted physical downlink shared channel.

The one of the acknowledgement or the negative acknowledgment may be associated with a physical downlink shared channel transmitted with a further apparatus.

The physical downlink shared channel may be transmitted simultaneously, with the at least one layer, with the example apparatus and a further apparatus.

The user equipment may be using a single downlink control information scheduling.

The example apparatus may comprise an anchor network node.

The example apparatus may be operating in a non-single frequency network.

The physical downlink shared channel may be transmitted on orthogonal frequency-division multiplexing symbols without scheduling restrictions.

The example apparatus may be operating in a single frequency network.

The physical downlink shared channel may be transmitted on at least one orthogonal frequency-division multiplexing symbol that is restricted.

In accordance with one aspect, an example method may be provided comprising: transmitting, with a network node to a user equipment, at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and transmitting, to the user equipment, a physical downlink shared channel with the at least one layer, wherein a number of layers of the at least one layer may be less than a number of layers of the plurality of layers accessible to the user equipment outside of the measurement window.

The example method may further comprise: receiving, from the user equipment, an indication of support for layer reduction during the measurement window.

The indication of support for layer reduction during the measurement window may comprise at least one of: a capability indication, or user assistance information.

The example method may further comprise: receiving, from the user equipment, a message via the at least one layer.

The example method may further comprise: receiving, from the user equipment, one of: an acknowledgment, or a negative acknowledgement.

The one of the acknowledgement or the negative acknowledgment may be associated with the transmitted physical downlink shared channel.

The one of the acknowledgement or the negative acknowledgment may be associated with a physical downlink shared channel transmitted with a further network node.

The physical downlink shared channel may be transmitted simultaneously, with the at least one layer, with the network node and a further network node.

The user equipment may be using a single downlink control information scheduling.

The network node may comprise an anchor network node.

The network node may be operating in a non-single frequency network.

The physical downlink shared channel may be transmitted on orthogonal frequency-division multiplexing symbols without scheduling restrictions.

The network node may be operating in a single frequency network.

The physical downlink shared channel may be transmitted on at least one orthogonal frequency-division multiplexing symbol that is restricted.

In accordance with one example embodiment, an apparatus may comprise: circuitry configured to perform: transmitting, with a network node to a user equipment, at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and circuitry configured to perform: transmitting, to the user equipment, a physical downlink shared channel with the at least one layer, wherein a number of layers of the at least one layer may be less than a number of layers of the plurality of layers accessible to the user equipment outside of the measurement window.

In accordance with one example embodiment, an apparatus may comprise: processing circuitry; memory circuitry including computer program code, the memory circuitry and the computer program code configured to, with the processing circuitry, enable the apparatus to: transmit, to a user equipment, at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the user equipment; and transmit, to the user equipment, a physical downlink shared channel with the at least one layer, wherein a number of layers of the at least one layer may be less than a number of layers of the plurality of layers accessible to the user equipment outside of the measurement window.

In accordance with one example embodiment, an apparatus may comprise means for performing: transmitting, to a user equipment, at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the apparatus; and transmitting, to the user equipment, a physical downlink shared channel with the at least one layer, wherein a number of layers of the at least one layer may be less than a number of layers of the plurality of layers accessible to the user equipment outside of the measurement window.

The means may be further configured to perform: receiving, from the user equipment, an indication of support for layer reduction during the measurement window.

The indication of support for layer reduction during the measurement window may comprise at least one of: a capability indication, or user assistance information.

The means may be further configured to perform: receiving, from the user equipment, a message via the at least one layer.

The means may be further configured to perform: receiving, from the user equipment, one of: an acknowledgment, or a negative acknowledgement.

The one of the acknowledgement or the negative acknowledgment may be associated with the transmitted physical downlink shared channel.

The one of the acknowledgement or the negative acknowledgment may be associated with a physical downlink shared channel transmitted with a further apparatus.

The physical downlink shared channel may be transmitted simultaneously, with the at least one layer, with the apparatus and a further apparatus.

The user equipment may be using a single downlink control information scheduling.

The apparatus may comprise an anchor network node.

The apparatus may be operating in a non-single frequency network.

The physical downlink shared channel may be transmitted on orthogonal frequency-division multiplexing symbols without scheduling restrictions.

The apparatus may be operating in a single frequency network.

the physical downlink shared channel may be transmitted on at least one orthogonal frequency-division multiplexing symbol that is restricted.

In accordance with one example embodiment, a non-transitory computer-readable medium comprising instructions stored thereon which, when executed with at least one processor, cause the at least one processor to: cause transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and cause transmitting, to the user equipment, of a physical downlink shared channel with the at least one layer, wherein a number of layers of the at least one layer may be less than a number of layers of the plurality of layers accessible to the user equipment outside of the measurement window.

In accordance with one example embodiment, a non-transitory computer-readable medium comprising program instructions stored thereon for performing at least the following: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and causing transmitting, to the user equipment, of a physical downlink shared channel with the at least one layer, wherein a number of layers of the at least one layer may be less than a number of layers of the plurality of layers accessible to the user equipment outside of the measurement window.

In accordance with another example embodiment, a non-transitory program storage device readable by a machine may be provided, tangibly embodying instructions executable by the machine for performing operations, the operations comprising: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and causing transmitting, to the user equipment, of a physical downlink shared channel with the at least one layer, wherein a number of layers of the at least one layer may be less than a number of layers of the plurality of layers accessible to the user equipment outside of the measurement window.

In accordance with another example embodiment, a non-transitory computer-readable medium comprising instructions that, when executed by an apparatus, cause the apparatus to perform at least the following: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and causing transmitting, to the user equipment, of a physical downlink shared channel with the at least one layer, wherein a number of layers of the at least one layer may be less than a number of layers of the plurality of layers accessible to the user equipment outside of the measurement window.

A computer implemented system comprising: at least one processor and at least one non-transitory memory storing instructions that, when executed by the at least one processor, cause the system at least to perform: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and causing transmitting, to the user equipment, of a physical downlink shared channel with the at least one layer, wherein a number of layers of the at least one layer may be less than a number of layers of the plurality of layers accessible to the user equipment outside of the measurement window.

A computer implemented system comprising: means for causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication and a second transmission configuration indication, wherein the first transmission configuration indication may be associated with the network node; and means for causing transmitting, to the user equipment, of a physical downlink shared channel with the at least one layer, wherein a number of layers of the at least one layer may be less than a number of layers of the plurality of layers accessible to the user equipment outside of the measurement window.

In accordance with one example embodiment, an apparatus may comprise: at least one processor; and at least one memory storing instructions that, when executed by the at least one processor, cause the apparatus at least to: transmit, to a user equipment, at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the apparatus; and transmit, to the user equipment, a physical downlink shared channel with the at least one layer, wherein a number of layers of the at least one layer may be less than a number of layers of the plurality of layers accessible to the user equipment outside of the measurement window.

The example apparatus may be further configured to: receive, from the user equipment, an indication of support for layer reduction during the measurement window.

The indication of support for layer reduction during the measurement window may comprise at least one of: a capability indication, or user assistance information.

The example apparatus may be further configured to: receive, from the user equipment, one of: an acknowledgment, or a negative acknowledgement that is associated with the transmitted physical downlink shared channel.

The example apparatus may be further configured to: determine that neither an acknowledgment nor a negative acknowledgement of the transmitted physical downlink shared channel is received from the user equipment; and perform discontinuous reception in response.

The physical downlink shared channel may be transmitted simultaneously, with the at least one layer, with the apparatus and a further apparatus.

The user equipment may be using multiple downlink control information scheduling.

The apparatus may comprise an anchor network node.

In accordance with one aspect, an example method may be provided comprising: transmitting, to a user equipment with a network node, at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and transmitting, to the user equipment, a physical downlink shared channel with the at least one layer, wherein a number of layers of the at least one layer may be less than a number of layers of the plurality of layers accessible to the user equipment outside of the measurement window.

The example method may further comprise: receiving, from the user equipment, an indication of support for layer reduction during the measurement window.

The indication of support for layer reduction during the measurement window may comprise at least one of: a capability indication, or user assistance information.

The example method may further comprise: receiving, from the user equipment, one of: an acknowledgment, or a negative acknowledgement that may be associated with the transmitted physical downlink shared channel.

The example method may further comprise: determining that neither an acknowledgment nor a negative acknowledgement of the transmitted physical downlink shared channel is received from the user equipment; and performing discontinuous reception in response.

The physical downlink shared channel may be transmitted simultaneously, with the at least one layer, with the network node and a further network node.

The user equipment may be using multiple downlink control information scheduling.

The network node may comprise an anchor network node.

In accordance with one example embodiment, an apparatus may comprise: circuitry configured to perform: transmitting, to a user equipment with a network node, at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and circuitry configured to perform: transmitting, to the user equipment, a physical downlink shared channel with the at least one layer, wherein a number of layers of the at least one layer may be less than a number of layers of the plurality of layers accessible to the user equipment outside of the measurement window.

In accordance with one example embodiment, an apparatus may comprise: processing circuitry; memory circuitry including computer program code, the memory circuitry and the computer program code configured to, with the processing circuitry, enable the apparatus to: transmit, to a user equipment, at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the apparatus; and transmit, to the user equipment, a physical downlink shared channel with the at least one layer, wherein a number of layers of the at least one layer may be less than a number of layers of the plurality of layers accessible to the user equipment outside of the measurement window.

In accordance with one example embodiment, an apparatus may comprise means for performing: transmitting, to a user equipment, at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the apparatus; and transmitting, to the user equipment, a physical downlink shared channel with the at least one layer, wherein a number of layers of the at least one layer may be less than a number of layers of the plurality of layers accessible to the user equipment outside of the measurement window.

The means may be further configured to perform: receiving, from the user equipment, an indication of support for layer reduction during the measurement window.

The indication of support for layer reduction during the measurement window may comprise at least one of: a capability indication, or user assistance information.

The means may be further configured to perform: receiving, from the user equipment, one of: an acknowledgment, or a negative acknowledgement that is associated with the transmitted physical downlink shared channel.

The means may be further configured to perform: determining that neither an acknowledgment nor a negative acknowledgement of the transmitted physical downlink shared channel is received from the user equipment; and discontinuous reception in response.

The physical downlink shared channel may be transmitted simultaneously, with the at least one layer, with the apparatus and a further apparatus.

The user equipment may be using multiple downlink control information scheduling.

The apparatus may comprise an anchor network node.

In accordance with one example embodiment, a non-transitory computer-readable medium comprising instructions stored thereon which, when executed with at least one processor, cause the at least one processor to: cause transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and cause transmitting, to the user equipment, a physical downlink shared channel with the at least one layer, wherein a number of layers of the at least one layer may be less than a number of layers of the plurality of layers accessible to the user equipment outside of the measurement window.

In accordance with one example embodiment, a non-transitory computer-readable medium comprising program instructions stored thereon for performing at least the following: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and causing transmitting, to the user equipment, a physical downlink shared channel with the at least one layer, wherein a number of layers of the at least one layer may be less than a number of layers of the plurality of layers accessible to the user equipment outside of the measurement window.

In accordance with another example embodiment, a non-transitory program storage device readable by a machine may be provided, tangibly embodying instructions executable by the machine for performing operations, the operations comprising: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and causing transmitting, to the user equipment, a physical downlink shared channel with the at least one layer, wherein a number of layers of the at least one layer may be less than a number of layers of the plurality of layers accessible to the user equipment outside of the measurement window.

In accordance with another example embodiment, a non-transitory computer-readable medium comprising instructions that, when executed by an apparatus, cause the apparatus to perform at least the following: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and causing transmitting, to the user equipment, a physical downlink shared channel with the at least one layer, wherein a number of layers of the at least one layer may be less than a number of layers of the plurality of layers accessible to the user equipment outside of the measurement window.

A computer implemented system comprising: at least one processor and at least one non-transitory memory storing instructions that, when executed by the at least one processor, cause the system at least to perform: causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and causing transmitting, to the user equipment, a physical downlink shared channel with the at least one layer, wherein a number of layers of the at least one layer may be less than a number of layers of the plurality of layers accessible to the user equipment outside of the measurement window.

A computer implemented system comprising: means for causing transmitting, to a user equipment with a network node, of at least one downlink control information, wherein the user equipment may be configured for use with a plurality of layers, wherein the at least one downlink control information may be configured to schedule at least one layer during a measurement window using, at least, a first transmission configuration indication, wherein the first transmission configuration indication may be associated with the network node; and means for causing transmitting, to the user equipment, a physical downlink shared channel with the at least one layer, wherein a number of layers of the at least one layer may be less than a number of layers of the plurality of layers accessible to the user equipment outside of the measurement window.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for:
receiving a physical downlink shared channel with a plurality of layers from at least two network nodes;
receiving at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes;
during the measurement window, performing at least one measurement; and
during the measurement window, performing receiving or transmission with the at least one layer, wherein a number of layers of the at least one layer is less than a number of layers of the plurality of layers received by the apparatus outside of the measurement window.

2. The apparatus of claim 1, wherein the means are further configured for:
transmitting, to at least one of the at least two network nodes, an indication of support for layer reduction during the measurement window.

3. The apparatus of claim 2, wherein the indication of support for layer reduction during the measurement window comprises at least one of:
a capability indication, or
user assistance information.

4. The apparatus of any one of claims 1 through 3, wherein the at least one measurement is performed based on at least one of:
at least one synchronization signal burst,
at least one synchronization signal block measurement timing configuration,
at least one synchronization configuration,
at least one physical broadcast channel block measurement timing configuration,
at least one measurement timing configuration,
at least one channel state information reference signal, or
at least one reference signal, other than the at least one channel state information reference signal, of which the apparatus is required to perform measurements.

5. The apparatus of any one of claims 1 through 4, wherein the at least one measurement is performed with a first receiver chain of the apparatus, wherein the receiving with the at least one layer is performed with a second receiver chain of the apparatus.

6. The apparatus of claim 5, wherein the means are further configured for:
determining to use the first receiver chain to perform the at least one measurement; and
determining to use the second receiver chain to receive with the at least one layer.

7. The apparatus of any one of claims 1 through 6, wherein the physical downlink shared channel is received with the at least one layer from at least one of:
the first network node, or
the second network node.

8. The apparatus of any one of claims 1 through 7, wherein the means are further configured for:
transmitting, to an anchor network node, one of:
an acknowledgment, or
a negative acknowledgement
with respect to the received physical downlink shared channel received with the at least one layer.

9. The apparatus of any one of claims 1 through 8, wherein the at least two network nodes are non-collocated.

10. The apparatus of any one of claims 1 through 9, wherein the apparatus is using single downlink control information scheduling.

11. The apparatus of any one of claims 1 through 10, wherein the at least one downlink control information is received from an anchor network node of the at least two network nodes.

12. The apparatus of any one of claims 1 through 11, wherein the apparatus is operating in a non-single frequency network.

13. A method comprising:
receiving, with a user equipment, a physical downlink shared channel with a plurality of layers from at least two network nodes;
receiving at least one downlink control information, wherein the at least one downlink control information is configured to schedule at least one layer during a measurement window using, at least, a first transmission configuration indication and a second transmission configuration indication, wherein the first transmission configuration indication is associated with a first network node of the at least two network nodes, wherein the second transmission configuration indication is associated with a second network node of the at least two network nodes;
during the measurement window, performing at least one measurement; and
during the measurement window, performing receiving or transmission with the at least one layer, wherein a number of layers of the at least one layer is less than a number of layers of the plurality of layers received by the user equipment outside of the measurement window.

14. An apparatus comprising means for:
receiving a physical downlink shared channel with a plurality of layers from at least two network nodes;
receiving at least one downlink control information, wherein the at least one downlink control information is configured to schedule at least one layer during a measurement window using, at least, a first transmission configuration indication, wherein the first transmission configuration indication is associated with a first network node of the at least two network nodes;
during the measurement window, performing at least one measurement; and
during the measurement window, performing receiving or transmission with the at least one layer, wherein a number of layers of the at least one layer is less than a number of layers of the plurality of layers received by the apparatus outside of the measurement window.

15. A method comprising:
receiving, with a user equipment, a physical downlink shared channel with a plurality of layers from at least two network nodes;
receiving at least one downlink control information, wherein the at least one downlink control information is configured to schedule at least one layer during a measurement window using, at least, a first transmission configuration indication, wherein the first transmission configuration indication is associated with a first network node of the at least two network nodes;
during the measurement window, performing at least one measurement; and
during the measurement window, performing receiving or transmission with the at least one layer, wherein a number of layers of the at least one layer is less than a number of layers of the plurality of layers received by the user equipment outside of the measurement window.
